(19) Europäisches Patentamt
European Patent Office
Office européen des brevets

(11) EP 2 364 844 B1

(12) **EUROPEAN PATENT SPECIFICATION**

(45) Date of publication and mention of the grant of the patent:
**09.12.2020 Bulletin 2020/50**

(21) Application number: **11157946.2**

(22) Date of filing: **11.03.2011**

(51) Int Cl.:
***B32B 27/36*** *(2006.01)* ***B32B 27/08*** *(2006.01)*
***B32B 27/18*** *(2006.01)* ***B32B 27/20*** *(2006.01)*
***B32B 27/28*** *(2006.01)* ***B32B 27/30*** *(2006.01)*

(54) **POLYCARBONATE RESIN LAMINATES**

POLYCARBONATHARZLAMINAT

STRATIFIÉS DE RÉSINE DE POLYCARBONATE

(84) Designated Contracting States:
**DE FR GB**

(30) Priority: **11.03.2010 JP 2010054044**

(43) Date of publication of application:
**14.09.2011 Bulletin 2011/37**

(73) Proprietor: **Shin-Etsu Chemical Co., Ltd.**
**Chiyoda-ku,**
**Tokyo (JP)**

(72) Inventors:
- **HIGUCHI, Koichi**
**Gunma-ken (JP)**
- **YOSHIKAWA, Yuji**
**Gunma-ken (JP)**

(74) Representative: **Mewburn Ellis LLP**
**Aurora Building**
**Counterslip**
**Bristol BS1 6BX (GB)**

(56) References cited:
**WO-A1-2009/096390**
**GB-A- 2 028 228**
**JP-A- 7 223 298**
**JP-A- 11 147 301**
**JP-A- 58 107 316**
**JP-A- 2003 062 952**
**JP-A- 2004 001 393**
**US-A- 5 250 359**
**US-A- 5 445 872**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 364 844 B1

## Description

This invention relates to a polycarbonate resin laminate comprising a substrate comprising a polycarbonate resin and a layer of a thermoplastic (meth)acrylic resin having a UV absorbing group immobilized thereto on the polycarbonate resin; and a cured film of a scratch resistant coating composition containing UV absorbing inorganic oxide fine particles disposed on the layer of the thermoplastic (meth)acrylic resin. More specifically, this invention relates to a polycarbonate resin laminate having excellent scratch resistance and high transparency for visible light and UV shielding property of the coating film simultaneously with good long term weatherability.

## BACKGROUND

Polycarbonate resin is a material which is used in a wide variety of optical applications because of its excellent transparency, impact strength, and high heat distortion temperature, and hence, good dimensional stability and workability, as well as self-extinguishing properties. However, it suffers from low surface hardness and inferior abrasion resistance, and this is disadvantageous for the transparency, which is the property most critical for a transparent material.

For the purpose of providing an improved hardness and scratch resistance with the polycarbonate, a coating agent may be used to form a surface protective coating on the surface of the polycarbonate substrate. Known coating agents include a coating agent comprising a composition prepared by hydrolyzing or partially hydrolyzing a hydrolyzable organosilane, a coating agent prepared by mixing colloidal silica with such composition, a radiation curable acryl coating agent, and a coating agent prepared by mixing colloidal silica with such acryl coating agent.

In the case of an open-air application where the polycarbonate resin with poor weatherability is exposed to full sunlight, the resin suffers from loss of impact strength and yellowing. As a countermeasure for such problems, addition of a UV absorber in the primer layer as well as introduction of a UV absorbing organic substituent by a chemical bond in the organic resin constituting the primer have been proposed. Examples of the UV absorber and the UV absorbing organic substituent include substituents such as benzophenone, benzotriazole, and triazine and organic compounds containing such substituents (see JP-A 4-106161, US5250359A (JP-B 3102696), JP-A 2001-47574, and JP-B 3841141).

However, these methods require separate preparation of a primer composition containing a UV absorber component, and the step of coating the primer require a coating environment capable of preventing entrapment of motes, dusts, and dirts in the coating. Accordingly, these method requiring multiple complicated steps were economically disadvantages.

Also proposed are methods for addressing these problems, and in particular, production by co-extruding or hot-pressing the polycarbonate resin with an acrylic resin has been proposed as a method for simplifying the production steps and improving economy of the production (See JP-A 58-107316, JP-A 55-59929, JP-A 2004-175094, JP-A 2003-201400, JP-A 2002-370324, JP-A 2003-62952, and JP-A 2004-1393). These methods are capable of imparting the weatherability to some extent by adding a UV absorber to the acrylic resin layer. However, these methods were associated with the bleeding out of the UV absorber which led to the problems such as whitening at the interface between the acrylic resin layer and the scratch resistant coating layer and loss of adhesion and delamination between these layers. Accordingly, these production processes were still insufficient.

Another method that has been employed is a method of adding an organic UV absorber also to the scratch resistant coating layer. However, when such compound is simply added to the coating composition, the product sufferes from reduced durability of the coating, namely, bleeding and flowing out of the UV absorber from the surface after long-term open air exposure. In addition to such lack of sustained durability, loss of the most critical property, namely, the scratch resistance property was also significant.

The above-mentioned US 5250359A discloses a coating composition for forming an undercoat layer, which contains a copolymer obtained from (a) an acrylic or methacrylic compound, (b) an alkoxysilyl group-containing acrylic or methacrylic compound and (c) an acrylic or methacrylic compound having ultraviolet light absorbability, such as benzophenone-substituted acrylic monomer or triazole-substituted acrylic monomer, also a coated resin molded article coated with an undercoat layer of the above coating composition, and with an overcoat layer of an organopolysiloxane-containing coating composition. The coated articles are said to exhibit excellent weatherability and abrasion resistance.

As described above, various attempts have been made to impart the polycarbonate resin with weatherability and scratch resistance. However, there has so far been no polycarbonate resin laminate which is advantageous in view of simplifying the production steps, and which has excellent scratch resistance and UV shielding property as well as high weatherability and durability sufficient for enduring long term open air exposure while retaining the excellent transparency to the visible light and impact strength inherent to the polycarbonate resin.

In view of the situation as described above, an object of the present invention is to provide a polycarbonate resin laminate which is advantageous in view of simplifying the production steps, and which has excellent scratch resistance and UV shielding property as well as high weatherability and durability sufficient for enduring long term open air exposure while retaining its excellent transparency.

The inventors of the present invention have made an intensive study to solve the problems as described above, and found that when a substrate (1) comprising a polycarbonate resin layer and a layer of a thermoplastic (meth)acrylic resin having a UV absorbing group immobilized thereto (1-ii) disposed on a surface of the polycarbonate resin layer is used, and a cured film (2) of a scratch resistant coating composition containing UV absorbing inorganic oxide fine particles, optionally also organic UV absorber, is disposed on the surface of the (meth)acrylic resin layer, the polycarbonate resin laminate exhibits excellent scratch resistance and UV shielding property as well as unprecedented long-term weatherability in open-air exposure while retaining its excellent transparency. The present invention has been completed on the basis of such finding.

Accordingly, the present invention provides, as specified in claim 1, a polycarbonate resin laminate comprising

(1) a substrate, comprising (1-i) a layer of polycarbonate resin and, on at least one surface of the polycarbonate resin layer, a layer of thermoplastic (meth)acrylic resin having a UV-absorbing group immobilized therein, and
(2) a scratch resistance film, of a cured coating composition containing UV-absorbing inorganic oxide fine particles, optionally also organic UV absorber, on said layer of the thermoplastic (meth)acrylic resin; wherein

in the substrate the thermoplastic (meth)acrylic resin having a UV absorbing group immobilized therein is a (meth)acrylic resin having a glass transition temperature of at least 90°C and obtainable by copolymerizing the following monomers:

(1-ii-a) a (meth)acrylic monomer having an organic UV absorbing group, and
(1-ii-b) a (meth)acrylic monomer other than monomer (1-ii-a) which is copolymerizable with monomer (1-ii-a), and wherein the copolymerizable (meth)acrylic monomer (1-ii-b) contains a (meth)acryloxypropyl trialkoxysilane as part thereof, and

in the scratch resistance film the UV-absorbing inorganic oxide fine particles are composite zinc oxide fine particles prepared by coating the surface of zinc oxide particles with at least one selected from oxides and hydroxides of A1, Si, Zr and Sn.

Preferably the laminate has a haze not more than 2%. The laminate may have a haze of up to 1 %.

The substrate (1) may be one formed by simultaneous co-extrusion of the polycarbonate resin and the thermoplastic acrylic resin having a UV absorbing group immobilized thereto, and the layer of the thermoplastic acrylic resin may have a thickness of 1 to 100 μm.

Alternatively the substrate (1) may be one formed by laminating a film of the thermoplastic acrylic resin having a UV absorbing group immobilized thereto, having a thickness of 1 to 100 μm, on the layer of the polycarbonate resin.

The cured film (2) may be one prepared by thermally curing a silicone coating composition comprising the UV absorbing inorganic oxide fine particles, optionally also organic UV absorber, with silica fine particles, a silicone resin and a curing catalyst.

Alternatively the cured film (2) may be one prepared by curing a (meth)acrylic coating composition, comprising the UV absorbing inorganic oxide fine particles, optionally also organic UV absorber, with silica fine particles, a compound having two or more (meth)acrylic groups per molecule, and a photopolymerization initiator, by irradiating the composition with a light beam.

Preferably the dispersion of composite zinc oxide fine particles exhibits a photocatalytic degradability after 12 hour irradiation with a black light of up to 25 % when the dispersion of composite zinc oxide fine particles is introduced in methylene blue solution, absorbance at 653 nm is measured before and after irradiating by a black light, and the photocatalytic degradability is calculated from difference in the absorbance before and after the irradiation by the following equation:

$$\text{Photocatalytic degradability (\%)} = [(A0-A)/A0] \times 100$$

wherein A0 represents initial absorbance and A represents absorbance after the black light irradiation.

Preferably the laminate does not show cracks, delamination, or yellowing of the cured film after 100 hours of weatherability test by using a Super UV Tester.

Another aspect (claim 13) is a method of making a polycarbonate resin laminate as defined above, comprising forming said substrate by combining said polycarbonate resin and thermoplastic (meth)acrylic resin, and applying said scratch-resistance film thereto.

ADVANTAGEOUS EFFECTS

The present invention is capable of providing a polycarbonate resin laminate which has excellent scratch

resistance and UV shielding property as well as high weatherability and durability sufficient for enduring long term open air exposure while retaining its excellent transparency.

FURTHER EXPLANATIONS; OPTIONS AND PREFERENCES

Next, the proposed polycarbonate resin laminates and methods of making them are described in detail.

(1-i) Polycarbonate resin

The polycarbonate resin (1-i) which constitutes one layer of the substrate (1) in the present invention is not particularly limited, and an example is the polycarbonate resin prepared by reacting a dihydric phenol with a carbonate precursor by interfacial polycondensation, melting process, or the like. Typical examples of the dihydric phenol include 2,2-bis(4-hydroxyphenyl)propane (referred to as bisphenol A), 2,2-bis(3-methyl-4-hydroxyphenyl)propane, 2,2-bis(3,5-dimethyl-4-hydroxyphenyl)propane, 1,1-bis(4-hydroxyphenyl)ethane, 1,1-bis(4-hydroxyphenyl)cyclohexane, 2,2-bis(4-hydroxyphenyl)butane, 2,2-bis(4-hydroxyphenyl)-3-methylbutane, 9,9-bis{(4-hydroxy-3-methyl)phenyl}fluorene, 2,2-bis(4-hydroxyphenyl)-3,3-dimethylbutane, 2,2-bis(4-hydroxyphenyl)-4-methylpentane, 1,1-bis(4-hydroxyphenyl)-3,3,5-trimethylcyclohexane, $\alpha,\alpha'$-bis(4-hydroxyphenyl)-m-diisopropylbenzene, bis(4-hydroxyphenyl)sulfide, and bis(4-hydroxyphenyl)sulfone. Of these, the preferred is bisphenol A. These dihydric phenols may be used alone or in combination of two or more.

Exemplary polycarbonate precursors include carbonyl halides, carbonate esters, and haloformates such as phosgene, diphenyl carbonate, and a dihaloformate of a dihydric phenol.

If desired, the production of the polycarbonate resin by reacting the dihydric phenol and the carbonate precursor as described above by interfacial polycondensation or melting process may be accomplished by using a catalyst, a chain terminator, an antioxidant for the dihydric phenol, or the like. The polycarbonate resin may be a branched polycarbonate resin prepared by copolymerizing tri- or higher functional polyfunctional aromatic compounds, a polyester carbonate resin prepared by copolymerizing an aromatic or an aliphatic difunctional carboxylic acids, or a mixture of two or more resulting polycarbonate resins.

The interfacial polycondensation using phosgene is conducted in the presence of an acid binding agent and an organic solvent. Exemplary acid binding agents include alkaline metal hydroxide such as sodium hydroxide and potassium hydroxide, and amine compounds such as pyridine, and the solvent used may be a halogenated hydrocarbon such as methylene chloride or chlorobenzene. The interfacial polycondensation may also be promoted by using a catalyst such as tertiary amine or quaternary ammonium. The reaction temperature is typically 0 to 40°C, and the reaction time is several minutes to 5 hours. The melting process using diphenyl carbonate is conducted in an inert gas atmosphere by heating predetermined amounts of the dihydric phenol component and the diphenyl carbonate with stirring, and removing the alcohol or phenol generated in the process by distillation. The reaction temperature used depends on the boiling temperature of the generated alcohol or phenol. The reaction temperature, however, is typically in the range of 120 to 300°C. The reaction is conducted under reduced pressure from the initial stage, and accomplished by removing the generated alcohol or the phenol by distillation. The reaction may also be promoted by using a catalyst commonly used for the ester interchange.

The molecular weight of the polycarbonate resin is not particularly limited as long as a sheet, a board, a plate, or the like can be produced by the commonly used extrusion molding. Preferably, the polycarbonate resin has a viscosity average molecular weight (M) of 10,000 to 50,000, and more preferably 15,000 to 35,000. The polycarbonate resin having such viscosity average molecular weight has sufficient strength as well as favorable melt flowability in the molding. The viscosity average molecular weight as used herein is the value calculated by substituting the specific viscosity ($\eta$sp) measured for a solution of 0.7 g of polycarbonate resin in 100 mL of methylene chloride at 20°C in the following equations:

$$\eta sp/c = [\eta] + 0.45 \times [\eta]2c$$

(wherein [$\eta$] is intrinsic viscosity)

$$[\eta] = 1.23 \times 10^{-4} M^{0.83}$$

c = 0.7 .

In producing the polycarbonate resin, additives may be added as desired. Exemplary such additives include stabilizers such as phosphite ester, phosphoric ester, and phosphonic ester; flame retardants such as decabromodiphenol, a low molecular weight polycarbonate of tetrabromobisphenol A, and decabromodiphenol; colorants, lubricants, UV

absorbers, antioxidants, and anticoloring agents.

The polycarbonate resin layer (substrate) is not limited for its thickness. The polycarbonate resin layer, however, may typically have a thickness of 0.1 to 30 mm, and preferably 0.3 to 15 mm in view of its use for glazing and optical applications.

(1-ii) Thermoplastic (meth)acrylic resin having a UV absorbing group immobilized thereto

The resin constituting another layer of the substrate (1) of the present invention, namely, the (meth)acrylic resin (1-ii) is a thermoplastic (meth)acrylic resin having a UV absorbing group immobilized thereto. This (meth)acrylic resin (1-ii) is a polymer produced by polymerizing a (meth)acrylic monomer having an organic UV absorbing group (1-ii-a) and a (meth)acrylic monomer (1-ii-b) other than the monomer (1-ii-a) and which is copolymerizable with the (meth)acrylic monomer (1-ii-a).

Of these, the (meth)acrylic monomer having an organic UV absorbing group (1-ii-a) is not particularly limited as long as it has an organic UV absorbing group and a (meth)acrylic polymerizable group in its molecule.

A merit of the present invention is that the use of the (meth)acrylic resin (1-ii) has enabled production of a laminate having a high UV absorbing ability even if the troublesome primer coating step that has been necessary in conventional methods is omitted. More specifically, the (meth)acrylic resin layer (1-ii) of the present invention has a UV absorbing group immobilized therein, and bleeding of the UV absorber is suppressed in contrast to the conventional (meth)acrylic resin layer formed by disposing a UV absorber-containing primer layer or the conventional (meth)acrylic resin layer formed by co-extrusion. Accordingly, precipitation of the UV absorber or whitening does not occur at the interface between the (meth)acrylic resin surface of the substrate and the cured scratch resistant coating film as will be described layer.

Exemplary (meth)acrylic monomer having the organic UV absorbing group as described above include (meth)acrylic monomers having the UV absorbing group attached in the molecule, and the examples include a benzotriazole compound represented by the following general formula (3) and a benzophenone compound represented by the following general formula (4).

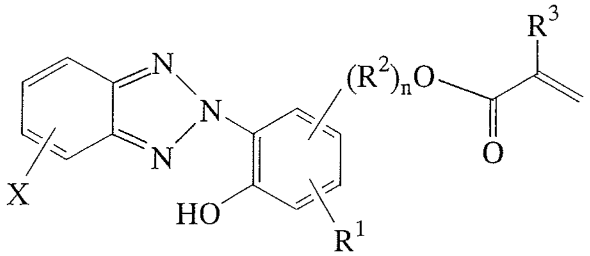

(3)

wherein X is hydrogen atom or chlorine atom; $R^1$ is hydrogen atom, methyl group, or a tertiary alkyl group containing 4 to 8 carbon atoms; $R^2$ is a straight chain or branched alkylene group containing 2 to 10 carbon atoms; $R^3$ is hydrogen atom or methyl group; and n is 0 or 1.

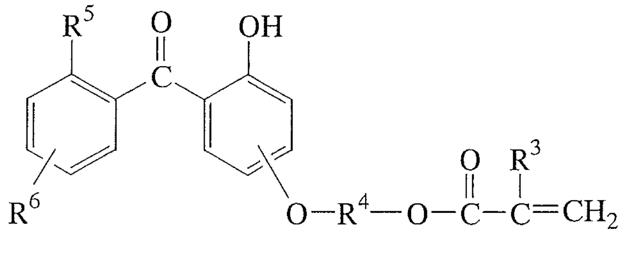

(4)

wherein $R^3$ is as defined above; $R^4$ is an unsubstituted or substituted straight chain or branched alkylene group containing 2 to 10 carbon atoms; $R^5$ is hydrogen atom or hydroxy group; and $R^6$ is hydrogen atom, hydroxy group, or an alkoxy group containing 1 to 6 carbon atoms.

Examples of the tertiary alkyl group containing 4 to 8 carbon atoms represented by $R^1$ in the general formula (3) include tert-butyl group, tert-pentyl group, tert-hexyl group, tert-heptyl group, tert-octyl group, and ditert-octyl group.

Examples of the straight chain or branched alkylene group containing 2 to 10 carbon atoms represented by $R^2$ include ethylene group, trimethylene group, propylene group, tetramethylene group, 1,1-dimethyl tetramethylene group, butylene group, octylene group, and decylene group.

Examples of the straight chain or branched alkylene group containing 2 to 10 carbon atoms represented by $R^4$ in the general formula (4) include those described for $R^2$ and those wherein some hydrogen atoms have been substituted with a halogen atom. Examples of the alkoxy group represented by $R^6$ include methoxy group, ethoxy group, propoxy group, and butoxy group.

Examples of the benzotriazole compound represented by the general formula (3) include 2-(2'-hydroxy-5'-(meth)acryloxyphenyl)-2H-benzotriazole, 2-(2'-hydroxy-3'-tert-butyl-5'-(meth)acryloxymethylphenyl)-2H-benzotriazole, 2-[2'-hydroxy-5'-(2-(meth)acryloxy ethyl)phenyl]-2H-benzotriazole, 2-[2'-hydroxy-3'-tert-butyl-5'-(2-(meth)acryloxyethyl)-phenyl]-5-chloro-2H-benzotriazole, and 2-[2'-hydroxy-3'-methyl-5'-(8-(meth)acryloxyoctyl)phenyl]-2H-benzotriazole.

Examples of the benzophenone compound represented by the general formula (4) include 2-hydroxy-4-(2-(meth)acryloxy ethoxy)benzophenone, 2-hydroxy-4-(4-(meth)acryloxy butoxy)benzophenone, 2,2'-dihydroxy-4-(2-(meth)acryloxy ethoxy)benzophenone, 2,4-dihydroxy-4'-(2-(meth)acryloxy ethoxy)benzophenone, 2,2',4-trihydroxy-4'-(2-(meth)acryloxy ethoxy)benzophenone, 2-hydroxy-4-(3-(meth)acryloxy-2-hydroxy propoxy)benzophenone, and 2-hydroxy-4-(3-(meth)acryloxy-1-hydroxy propoxy)benzophenone.

Of the UV absorbing (meth)acrylic monomers as described above, the preferred are the benzotriazole compound represented by the formula (3), and the most preferred is 2-[2'-hydroxy-5'-(2-(meth)acryloxy ethyl)phenyl]-2H-benzotriazole.

The UV absorbing vinyl monomers as described above may be used either alone or as a mixture of two or more.

The (meth)acrylic monomer containing the organic UV absorbing group (1-ii-a) is preferably used at 1 to 40 % by weight, and more preferably, at 3 to 25 % by weight based on the copolymer composition. Sufficient weatherability is not usually realised at less than 1% by weight. On the other hand, the content in excess of 40 % by weight may result in the glass transition temperature of the (meth)acrylic resin (1-ii) of less than 90°C, and this may invite generation of cracks on the scratch resistant coating film on the surface, reduced adhesion, and poor outer appearance such as whitening of the laminate.

The copolymerizable (meth)acrylic monomer (1-ii-b) contains polymerizable (meth)acrylic group, and is other than monomer (1-ii-a). It contains (meth)acryloxypropyl-trialkoxysilane as a part thereof in view of the adhesion of the scratch resistant coating composition with the cured film. The (meth)acryloxypropyl trialkoxysilane may be used in an amount of 0.1 to 20 % by weight, and more preferably 0.3 to 5 % by weight based on the entire amount of the (meth)acrylic monomer (1-ii-b) for realizing the effect as described above.

Preferred examples of monomer (1-ii-b), which may be used alone or in combination of two or more, include methyl methacrylate, methyl acrylate, ethyl acrylate, methacryloxypropyltrimethoxysilane, methacryloxypropyltriethoxysilane, acryloxypropyltrimethoxysilane, methacryloxypropylmethyldimethoxysilane, and methacryloxypropylmethyldiethoxysilane,

The copolymerizable (meth)acrylic monomer (1-ii-b) may be used in an amount of 60 to 99 % by weight, and preferably 75 to 97 % by weight based on the copolymer composition. Of these, the preferred is the use of methyl methacrylate alone (60 to 99 % by weight), or methyl methacrylate as the main constituent (40 to 98.9 % by weight) with methyl acrylate, ethyl acrylate, and/or methacryloxypropyltrialkoxysilane at 0.1 to 20 % by weight.

Thermoplastic (meth)acrylic resin having a UV absorbing group immobilized thereto(1-ii) may have a weight average molecular weight of 3 to about 300,000 as measured by gel permeation chromatography (GPC) versus polystyrene, while the resin is not limited to the one having such molecular weight. Since insufficient heat resistance of the (meth)acrylic resin leads to problems such as scorching in the molding, the thermoplastic (meth)acrylic resin has a glass transition temperature of at least 90°C, preferably at least 93°C, and more preferably at least 95°C. While the upper limit is not particularly set, the glass transition temperature is typically up to 105°C.

Non-limiting methods used for producing the thermoplastic (meth)acrylic resin having a UV absorbing group immobilized thereto(1-ii) include solution polymerization, emulsion polymerization, suspension polymerization, and continuous polymerization. A (meth)acrylic resin suitable for the present use is produced by continuous polymerization. While the continuous polymerization includes continuous bulk polymerization and continuous solution polymerization, the (meth)acrylic resin used in the present invention may be the (meth)acrylic resin produced by either method.

The continuous bulk polymerization and the continuous solution polymerization are carried out without using additives such as emulsifier or suspension dispersant, and the system only contains a polymerization initiator for initiating the polymerization and a chain transfer agent for adjusting the molecular weight. Examples of the solvent used in the continuous solution polymerization include toluene, ethylbenzene, xylene, hexane, octane, cyclohexane, methanol, ethanol, propanol, butanol, acetone, and methyl ethyl ketone. The solvent is not particularly limited, and any solvent may be used as long as the solvent is effective for the polymerization and the solvent does not remain in the resulting (meth)acrylic resin.

The polymerization initiator may be selected from those commonly used in the art such as azo polymerization initiators and peroxide polymerization initiators such as those described in the catalogs of NOF Corporation, Wako Pure Chemical Industries, Ltd., Kayaku Akzo Corporation, and the like. Non-limiting exemplary azo polymerization initiators

include 2,2'-azobisisobutyronitrile, 2,2'-azobis(2-methyl butyronitrile), and 1,1'-azobis (cyclohexane-1-carbonitrile), and non-limiting exemplary peroxide polymerization initiators include benzoyl peroxide, di-t-butyl peroxide, and di-t-amyl peroxide. The chain transfer agents used is typically a mercaptan selected from those described in the catalogs of Kao Corporation and NOF Corporation. Non-limiting exemplary mercaptans include butyl mercaptan, hexyl mercaptan, octyl mercaptan, and dodecyl mercaptan. The polymerization initiator and the chain transfer agent are present at the terminal of the (meth)acrylic polymer, and therefore, they do not cause the problems like spots and streaks. The decomposition products of the polymerization initiator which failed to bond to the terminal of the polymer dissolve into the (meth)acrylic polymer, and therefore, the decomposition products are also free from the problems like spots and streaks. The intact mercaptan remaining in the system is almost completely removed in the course of the removal of volatile components such as non-reacted monomer and solvents, and the trace amount of the mercaptan remaining in the system completely dissolves in the (meth)acrylic resin and the polycarbonate resin not causing the problems as described above.

The (meth)acrylic resin may have various additives added to the extent not adversely affecting the resin. Exemplary such additives include an organic UV absorber and a light stabilizer added for the purpose of improving the weatherability. Exemplary organic UV absorbers include benzophenone, benzotriazole, phenyl salicylate, and triazine UV absorbers.

The layer of the (meth)acrylic resin (1-ii) constituting the substrate (1) may have a thickness of 1 to 100 μm, preferably 3 to 80 μm, and more preferably 5 to 50 μm. The merit of our proposals is not usually realised at a thickness of less than 1 μm while a thickness in excess of 100 μm may result in the loss of the impact strength of the polycarbonate resin as well as economic disadvantage.

Exemplary methods used for producing the substrate (1) having the layer of the thermoplastic (meth)acrylic resin having a UV absorbing group immobilized thereto (1-ii) disposed on one surface of the substrate of the polycarbonate resin (1-i) include co-extrusion and lamination.

Accordingly, the substrate (1) may be the one produced by co-extruding the polycarbonate resin (1-i) and the thermoplastic acrylic resin having a UV absorbing group immobilized thereto (1-ii), and in this case, the layer of the thermoplastic acrylic resin (1-ii) may have a thickness of 1 to 100 μm.

In a non-limiting exemplary production of the substrate (1) by the co-extrusion, the extruder used for the production of the substrate (1) typically comprises one main extruder for extruding the polycarbonate resin, and one or more sub-extruders for the (meth)acrylic resin constituting the coating layer. The sub-extruder employed is the one smaller than the main extruder. The main extruder is used under the condition at a temperature of typically 230 to 290°C, and preferably 240 to 280°C, and the sub- extruder is used under the condition at a temperature of typically 220 to 270°C, and preferably 230 to 260°C. Exemplary method known in the art used for laminating two or more molten resin layers include the method using a feed block, and a multimanifold method. In the method using the feed block, the laminate of the molten resins disposed one on another in the feed block is guided to a sheet forming die such as a T die, and then, to mirror-finished shaping rolls (polishing rolls) to form a bank. During the passage between the rollers, the sheet is subjected to mirror finishing and cooling to thereby form the laminate. In the case of the method using a multimanifold, the molten resins laminated in the die is formed into a sheet in the same die, and then, subjected to surface finishing and cooling by the shaping rolls to thereby form a laminate. The temperature of the die is typically 220 to 280°C, and preferably 230 to 270°C, and the temperature of the shaping rolls is typically 100 to 190°C, and preferably 110 to 180°C. The rolls used may be adequately selected from vertical rolls and horizontal rolls.

The substrate (1) may be the one produced by lamination method in which a film of a thermoplastic (meth)acrylic resin having a UV absorbing group immobilized thereto (1-ii) having a thickness of 1 to 100 μm is laminated on a layer of the polycarbonate resin (1-i).

The lamination method may be a method known in the art such as lamination by extrusion or the lamination using an adhesive. For example, a preliminarily formed film of a thermoplastic (meth)acrylic resin having a UV absorbing group immobilized thereto (1-ii) may be laminated on a preliminarily formed polycarbonate resin (1-i) by a method known in the art.

(2) Cured film of scratch resistant coating composition containing UV absorbing inorganic oxide fine particles and/or organic UV absorber

The cured film (2) of a scratch resistant coating composition used in the present invention which is disposed on the thermoplastic (meth)acrylic resin (1-ii) of the substrate is defined in claim 1 and is a scratch resistant UV absorbing coating film. In view of the excellent scratch resistance of the resulting film, the preferred films are,

- a cured film of a heat-curable silicone coating composition comprising the inorganic oxide fine particles, (optionally also organic UV absorber) (2-i), silica fine particles (2-ii), a silicone resin (2-iii), and a curing catalyst (2-iv) and,
- a cured film of a radiation-curable (meth)acryl coating composition comprising component (2-i), component (2-ii), a compound having at least two (meth)acrylic groups per molecule (2-v), and photopolymerization initiator (2-vi).

(2-i) The inorganic oxide fine particles are said composite zinc oxide particles and have a low photocatalytic activity. They are provided as a dispersion in a dispersion medium of composite zinc oxide fine particles obtained by coating the surface of the zinc oxide fine particles with at least one member selected from oxides and hydroxides of Al, Si, Zr, and Sn. The composite zinc oxide fine particle dispersion desirably has photocatalytic degradability of up to 25 %. As used herein, the photocatalytic degradability is determined by adding the composite zinc oxide fine particle dispersion to a methylene blue solution, irradiating black light to the methylene blue solution for 12 hours, measuring absorbance of the solution at 653 nm before and after the black light irradiation, and calculating change of the absorbance before and after the black light irradiation according to the following equation:

$$\text{Photocatalytic degradability (\%)} = [(A0-A)/A0] \times 100$$

wherein A0 is the initial absorbance and A is the absorbance after the black light irradiation.

More preferably, the composite zinc oxide fine particles are those obtained by heating a zinc source in a direct current arc plasma for vaporization, oxidizing the zinc vapor, and cooling, thus forming zinc oxide fine particles, and coating the surface of the zinc oxide fine particles with at least one member selected from oxides and hydroxides of Al, Si, Zr and Sn. The resulting composite zinc oxide fine particles are then dispersed in a dispersion medium to yield a composite zinc oxide fine particle dispersion.

The (surface-coated) composite zinc oxide fine particles are characterized by a fully low photocatalytic activity. In general, zinc oxide fine particles have a UV shielding function and a photocatalyst function at the same time. If such zinc oxide fine particles are used as a UV shielding agent in a scratch resistant coating composition, their photocatalyst function can degrade the binder and the resulting coating may develop cracks. By contrast, the (surface-coated) composite zinc oxide fine particles have a very low photocatalytic activity, thus minimizing the crack formation. Since the (surface-coated) composite zinc oxide fine particles are prepared by coating the surfaces of the zinc oxide fine particles with an oxide or hydroxide, typically silica, and preferably further conducting a surface treatment with a hydrolyzable silane, their photocatalytic activity is minimized.

The photocatalytic activity may be evaluated by measuring absorbance change by photodegradation of methylene blue. More specifically, the dispersion of the (surface-coated) composite zinc oxide fine particles of the present invention is added to 20 g of methylene blue solution in water/methanol (weight ratio, 1:1) having a methylene blue concentration of 0.01 mmol/L so that the concentration of the solid content ((surface-coated) composite zinc oxide fine particles) in the solution is 0.15 g. The solution is stirred in the dark for 30 minutes, and then irradiated with black light at a power of 15 W for 12 hours. Thereafter, the solution is centrifuged at 3,000 rpm for 15 minutes to collect the supernatant, and the absorbance of methylene blue at 653 nm is measured by a UV/visible spectrophotometer. The photocatalytic degradability is calculated from the absorbance before the black light irradiation and the absorbance after the black light irradiation according to the following equation:

$$\text{photocatalytic degradability (\%)} = [(A0-A)/A0] \times 100$$

wherein A0 represents the initial absorbance and A represents the absorbance after the black light irradiation.

The (surface-coated) composite oxide fine particles should have a photocatalytic degradability of up to 25 %,more preferably up to 23 %.

The photocatalytic degradability of the composite zinc oxide fine particles can be made not above 25% by treating the surfaces of the zinc oxide fine particles by the method to be described later, i.e., by coating the particles with at least one member selected from oxides and hydroxides of Al, Si, Zr and Sn, and optionally, further surface treating the particles with at least one member selected from hydrolyzable silanes and partial hydrolytic condensates thereof.

The zinc oxide fine particles may be prepared by a plasma method such as DC arc plasma, plasma jet, or high-frequency plasma method. The DC arc plasma method is the most preferred because of its high productivity. Since the zinc oxide fine particles prepared by the DC arc plasma method have a very strong adsorptivity probably because of good surface crystallinity so that they strongly adsorb amino, imino, quaternary ammonium base or other functional groups in a dispersant, the particles are uniformly dispersed and they do not adsorb each other. As a result, a coating composition having compounded therein the zinc oxide fine particles prepared by such plasma method may form a coating which is highly transparent and free of turbidity. Preferably, a dispersant may be used in dispersing the (surface-coated) composite zinc oxide fine particles in a dispersion medium.

The DC arc plasma method which is used in preparing zinc oxide fine particles involves the steps of providing a consumable anode made of a zinc source such as metallic zinc, producing a plasma flame of argon gas from a cathode, heating the zinc source for evaporation, and oxidizing the zinc vapor, followed by cooling. By this method, zinc oxide

fine particles are effectively prepared, which have an average particle size (volume average particle size $D_{50}$) in the range of 10 to 200 nm as measured by the light scattering method. Particles with an average particle size of less than 10 nm may be inefficient to prepare whereas an average particle size of more than 200 nm indicates a higher possibility of coarse particle formation.

Next, the surface of the resulting zinc oxide fine particles are coated with at least one member selected from oxides and hydroxides of Al, Si, Zr and Sn to prepare the composite zinc oxide fine particles. Examples of the composite zinc oxide fine particles include those in which zinc oxide fine particles are provided with an oxide coating by using an alkoxide of Al, Si, Zr or Sn and effecting hydrolysis, and those which are obtained by adding an aqueous solution of sodium silicate to zinc oxide fine particles, neutralizing the solution for causing an oxide or hydroxide to precipitate on particle surfaces, and optionally further heating the precipitated oxide or hydroxide to enhance crystallinity.

In the composite zinc oxide fine particles, coating weight of the oxide and/or hydroxide is preferably 0.1 to 20 % by weight, and more preferably 1 to 10 % by weight. If the coating weight is less than 0.1 % by weight, such a coating is ineffective for suppressing the photocatalytic activity and improvement of the chemical resistance will be difficult. When the coating weight is in excess of 20 % by weight, amount of the core zinc oxide will be less than 80 % by weight, and this may lead to the loss of UV shielding efficiency per unit weight.

In addition, the composite zinc oxide fine particles of the present invention are preferably surface-coated composite zinc oxide fine particles whose surface has been treated with at least one member selected from hydrolyzable silanes represented by the following formula (i):

$$(R^{01})_x(R^{02})_ySi(X')_{4-x-y} \qquad (i)$$

wherein $R^{01}$ and $R^{02}$ are independently hydrogen atom or an unsubstituted or substituted monovalent hydrocarbon group; X' is a halogen atom, an alkoxy group containing 1 to 3 carbon atoms, an acyloxy group containing 1 to 3 carbon atoms, or isocyanate group; and x is 0 or 1, y is 0, 1, or 2, with the proviso that x+y is 0, 1, 2, or 3; and partial hydrolytic condensate thereof.

More specifically, the surface treatment is carried out by adding a hydrolyzable silane represented by the formula (i) to the composite zinc oxide fine particles, hydrolyzing the silane in the presence of water and a basic organic compound, and effecting silanol condensation reaction of the hydrolyzate. This is the so-called sol-gel process.

In formula (i), $R^{01}$ and $R^{02}$ are independently hydrogen atom or an unsubstituted or substituted monovalent hydrocarbon group, and the monovalent hydrocarbon group is preferably the one containing 1 to 12 carbon atoms, and more preferably the one containing 1 to 8 carbon atoms such as alkyl groups, alkenyl groups, aryl groups, and aralkyl groups. Exemplary substituents in the substituted monovalent hydrocarbon group include halogen atoms such as chlorine and fluorine, amino group, epoxy group, glycidyl oxy group, mercapto group, (meth)acryloyloxy group, and carboxy group. X' is a halogen atom, an alkoxy group containing 1 to 3 carbon atoms, an acyloxy group containing 1 to 3 carbon atoms, or isocyanate group; and x is 0 or 1, y is 0, 1, or 2, with the proviso that x+y is 0, 1, 2, or 3.

Exemplary hydrolyzable silanes include tetrafunctional silanes such as tetramethoxysilane, tetraethoxysilane, tetra(n-propoxy)silane, tetraisopropoxysilane, and tetra(n-butoxy)silane; trifunctional silanes such as methyltrimethoxysilane, methyltriethoxysilane, n-propyltrimethoxysilane, isopropyltrimethoxysilane, n-butyltrimethoxysilane, tert-butyltrimethoxysilane, n-hexyltrimethoxysilane, n-octyltrimethoxysilane, isooctyltrimethoxysilane, dodecyltrimethoxysilane, octadecyltrimethoxysilane, cyclohexyltrimethoxysilane, benzyltrimethoxysilane, phenyltrimethoxysilane, phenyltriethoxysilane, 4-butylphenyltrimethoxysilane, 3-aminopropyltrimethoxysilane, 3-aminopropyltriethoxysilane, 3-glycidyloxypropyltrimethoxysilane, 3-glycidyloxypropyltriethoxysilane, 3-mercaptopropyltrimethoxysilane, 3-acryloyloxypropyltrimethoxysilane, 3-carboxypropyltrimethoxysilane, (3,3',3"-trifluoropropyl)trimethoxysilane, (3,3',3"-trifluoropropyl)triethoxysilane, pentafluorophenyltrimethoxysilane, and pentafluorophenyltriethoxysilane; difunctional silanes such as dimethyldimethoxysilane, dimethyldiethoxysilane, dibutyldimethoxysilane, dihexyldimethoxysilane, didodecyldimethoxysilane, methyloctyldimethoxysilane, dodecylmethyldimethoxysilane, diphenyldimethoxysilane, and diphenyldiethoxysilane; and monofunctional silanes such as triethylmethoxysilane, triethylethoxysilane, tripropylmethoxysilane, triphenylmethoxysilane, triphenylethoxysilane, diphenylmethylmethoxysilane, and diphenylmethylethoxysilane.

Exemplary partial hydrolytic condensates of such hydrolyzable silane which can be used include partial hydrolytic condensates of tetramethoxysilane such as those commercially available under the trade names of "M Silicate 51" manufactured by Tama Chemicals Co., Ltd., "MSI51" manufactured by COLCOAT CO., Ltd., and "MS51" and "MS56" manufactured by Mitsubishi Chemical Corporation); partial hydrolytic condensates of tetraethoxysilane such as those commercially available under the trade names of "Silicate 35" and "Silicate 45" manufactured by Tama Chemicals Co., Ltd., and "ESI40" and "ESI48" manufactured by COLCOAT CO., Ltd.); and co-partial hydrolytic condensates of tetramethoxysilane and tetraethoxysilane such as those commercially available under the trade names of "FR-3" manufactured by Tama Chemicals Co., Ltd. and "EMSi48" manufactured by COLCOAT CO., Ltd..

Of these, the preferred are tetraalkoxysilanes such as tetramethoxysilane and tetraethoxysilane; trialkoxysilanes such as methyltrimethoxysilane, methyltriethoxysilane, n-propyltrimethoxysilane, isopropyltrimethoxysilane, n-butyltrimethoxysilane, n-hexyltrimethoxysilane, n-octyltrimethoxysilane, and dodecyltrimethoxysilane; and dialkoxysilanes such as dimethyldimethoxysilane, dimethyl diethoxysilane, dibutyl dimethoxysilane, dihexyldimethoxysilane, octylmethyldimethoxysilane, and dodecylmethyldimethoxysilane; and partial hydrolytic condensate thereof.

For the alkoxysilane, an alkoxysilane having a fluoroalkyl group or a fluoroaryl group such as (3,3' ,3"-trifluoropropyl)trimethoxysilane, (3,3' ,3"-trifluoropropyl)triethoxysilane, pentafluorophenyltrimethoxysilane, or pentafluorophenyltriethoxysilane may be used alone or as a mixture of two or more to thereby impart improved water resistance, humidity resistance, and stain resistance to the resulting surface treatment layer.

These hydrolyzable silanes and partial hydrolytic condensates thereof may be used alone or as a mixture of two or more. In view of forming a surface treatment layer on composite zinc oxide fine particles, the amount of monofunctional silane used is preferably up to 70 % by mole of the overall silanes. Similarly, the amount of tri- and tetrafunctional silanes used is preferably 1 to 90 % by mole of the overall silanes. In view of improving the denseness of the surface treatment layer for enhancing water resistance, acid resistance, zinc anti-leaching, and photocatalysis-blocking ability, the amount of tri- and tetrafunctional silanes used is more preferably up to 80 % by mole, and still more preferably up to 70 % by mole and more preferably at least 5 % by mole, and still more preferably at least 10 % by mole.

The hydrolyzable silanes and partial hydrolytic condensates thereof are preferably used at such amounts that a ratio of the moles of the silicon atoms in the hydrolyzable silane to moles of total metal atoms in the composite zinc oxide fine particles (i.e., total of the zinc atoms in the core and the metal atoms in the oxide or hydroxide surface coating) may range from 0.1 to 100. For the purposes of increasing the content of the zinc oxide per unit weight, the upper limit of the amount of the hydrolyzable silane is such that the ratio is more preferably up to 70 and even more preferably up to 50. For the purposes of imparting anti-agglomeration to composite zinc oxide fine particles, the lower limit of the amount of the hydrolyzable silane is such that the ratio is more preferably at least 0.5 and even more preferably at least 1.

The basic organic compound used in the surface treatment of the composite zinc oxide fine particles in the present invention functions as a catalyst for hydrolysis of the hydrolyzable silane or partial hydrolytic condensate thereof and the corresponding silanol condensation reaction. Suitable basic organic compounds include tertiary amines such as trimethylamine, triethylamine, tri-n-propylamine, triisopropylamine, tributylamine, diisopropylethylamine, triphenylamine, N-methylpyrrolidine, and N-methylpiperidine; and nitrogen-containing heterocyclics such as pyridine, methylpyridine, dimethylpyridine, trimethylpyridine, and quinoline. Of these, the preferred are tertiary amines containing 6 to 12 carbon atoms such as triethylamine, tri-n-propylamine, triisopropylamine, tributylamine, diisopropylethylamine, N-methylpyrrolidine, and N-methylpiperidine.

The basic organic compound is preferably used in an amount of 0.001 to 10 % by weight based on the hydrolyzable silane or partial hydrolytic condensate. For the purposes of controlling reaction and imparting anti-agglomeration to composite zinc oxide fine particles, the maximum amount of basic compound is more preferably up to 8 % by weight, and even more preferably up to 5 % by weight. From the standpoint of reaction rate or the like, the minimum amount of basic compound is more preferably at least 0.002 % by weight, and even more preferably at least 0.005 % by weight.

The amount of water used for hydrolysis of the hydrolyzable silane or the partial hydrolytic condensate thereof is preferably such that the moles of the water is 0.1 to 10 times the moles of the hydrolyzable groups in the hydrolyzable silane. In view of controlling the hydrolysis of the hydrolyzable silane and the silanol condensation reaction, the moles of the water is more preferably up to 7 times, and still more preferably up to 5 times the moles of the hydrolyzable groups. In view of the hydrolysis and silanol condensation reaction, the moles of the water is more preferably at least 0.3 time, and still more preferably at least 0.5 time the moles of the hydrolyzable groups.

With regard to the surface treatment of the composite zinc oxide fine particles, the procedure and order of addition of the hydrolyzable silane or the partial hydrolytic condensate thereof, the basic organic compound, and the water are not particularly limited. Exemplary procedures, all starting with a liquid phase containing the composite zinc oxide fine particles, include a procedure of first adding the hydrolyzable silane to the liquid phase, then adding the basic organic compound and water sequentially or simultaneously thereto; a procedure of first adding the basic organic compound to the liquid phase, then adding the hydrolyzable silane and water sequentially or simultaneously thereto; and a procedure of premixing the hydrolyzable silane, basic organic compound and water, and adding the premix to the liquid phase. Of these, the procedure wherein the water is added at last is preferred in view of controlling the reaction, and the most preferred is the procedure wherein the hydrolyzable silane is first added to the liquid phase, the basic organic compound is then added, and the water is finally added.

In view of improving dispersion stability, a dispersant may be added to the (surface-coated) composite zinc oxide fine particle dispersion. Since the dispersant has an organic functional group that adsorbs to and orients the surfaces of the inorganic particles to play the role of protecting the minute fine particles, such dispersant is essential for preparing a highly stable dispersion. Exemplary organic functional groups include hydroxyl group, carboxyl group, sulfonic acid group, phosphoric acid group, amino group, imino group, quaternary ammonium group, quaternary phosphonium group, and salts of the foregoing groups, amide group, and acetylacetonato groups. Of these, carboxyl group and phosphoric acid group, and sodium and ammonium salts thereof are preferred. The preferred compounds having such a functional group and contributing more to the dispersibility are organic polymers having these functional groups on

side chains. Exemplary dispersants include organic polymers derived from at least one of functional monomers such as (meth)acrylic acid, phosphoric acid group-containing (meth)acrylates, hydroxyalkyl(meth)acrylates, maleic anhydride, and sulfonic acid group-containing styrene, and more preferably ionic surfactants such as polyacrylates including (meth)acrylic acid, maleic anhydride, and phosphoric acid group-containing (meth)acrylates, polyester amines, fatty acid amines, sulfonic acid amides, caprolactones, quaternary ammonium salts; nonionic surfactants such as polyoxyethylene and polyol esters; water-soluble polymers such as hydroxypropyl cellulose, and polysiloxane. Useful dispersants are commercially available under the trade name of Poise 520, 521, 532A and 2100 (Kao Corp.), Disperbyk 102, 161, 162, 163, 164, 180 and 190 (BYK), Aron T-40 (Toa Gosei Co., Ltd.), Solsperse 3000, 9000, 17000, 20000, and 24000 (Zeneka Co., Ltd.). They may be used alone or in admixture.

The dispersant is preferably used in an amount of 0 to 30 parts, more preferably 0.5 to 20 parts by weight, and still more preferably 1 to 20 parts by weight per 100 parts by weight as solids of the (surface-coated) composite zinc oxide fine particles. Use of the dispersant in excess of 30 parts by weight has adverse effects on the scratch resistance and weatherability of the coating.

The dispersion of the (surface-coated) composite zinc oxide fine particles is a dispersion of the (surface-coated) composite zinc oxide fine particles described above in a dispersion medium. The dispersion medium used is not particularly limited, and exemplary media include water, alcohols such as methanol, ethanol, isopropanol, n-butanol, isobutanol, stearyl alcohol, oleyl alcohol, and lauryl alcohol, aromatic hydrocarbons such as toluene and xylene, esters such as ethyl acetate and butyl acetate, ketones such as methyl ethyl ketone and methyl isobutyl ketone, glycol ethers such as ethyl cellosolve and propylene glycol monomethyl ether, and saturated hydrocarbons such as n-hexane, and mixtures thereof.

The amount of the (surface-coated) composite zinc oxide fine particles dispersed is not particularly limited. They are preferably dispersed at a concentration as high as possible, but in the range not affecting the dispersibility. Usually the dispersion contains 5 to 80 % by weight, and preferably 10 to 60 % by weight of the (surface-coated) composite zinc oxide fine particles. When the concentration is less than 5 % by weight, the proportion of the dispersion medium is too high, and this may result in a lower concentration of total solids after addition of a vinyl copolymer, failing to form a coating with an appropriate thickness. A concentration in excess of 80 % by weight may impair dispersion stability or cause a viscosity buildup and hence, handling inconvenience.

A mechanical grinding/dispersing apparatus of any well-known type may be used, and exemplary apparatus include a bead mill, jet mill, attritor, sand mill, ultrasonic mill, and disk mill. The bead mill using beads is preferred because the desired product can be obtained in a short time. Exemplary bead mills include Minizeta, Labstar, Star Mill LMZ and Star Mill ZRS manufactured by Ashizawa Finetec, Ltd., Ultra-Apex Mill manufactured by Kotobuki Industries Co., Ltd., and Maxvisco Mill manufactured by Imex Co., Ltd. The time used for the dispersion varies depending on the diameter and identity of the beads as well as the peripheral speed of the mill. In general, beads of a ceramic material such as alumina or zirconia having a diameter of 0.03 to 0.5 mm are used. The bead mill is preferably operated for a milling time of 20 minutes to 5 hours, and more preferably 30 minutes to 3 hours.

When the dispersant as described above is used, it should preferably be co-present when the (surface-coated) composite zinc oxide fine particles and dispersion medium are mechanically ground and dispersed on the apparatus as described above. When the (surface-coated) composite zinc oxide fine particles and dispersion medium are mechanically ground and dispersed without adding the dispersant, and the dispersant is added afterwards, the agglomerates may not be disintegrated to the desired average particle size of the dispersion.

The composite zinc oxide fine particles in the dispersion should preferably have an average particle size (volume average particle size $D_{50}$) in the range of 10 to 200 nm as measured by the light scattering method. Particles with an average particle size in excess of 200 nm may lead to a coating having low visible light transmittance. A volume average particle size $D_{50}$ of up to 150 nm is more preferable. Particles with a volume average particle size $D_{50}$ of less than 10 nm may suffer from handling inconvenience. While the particle size distribution does not depend on the instrument used for the measurement, the average particle size is defined by the value measured by Nanotrac UPA-EX150 by Nikkiso Co., Ltd. or LA-910 by Horiba Mfg. Co., Ltd.

The dispersion used may be a commercially available product, for example, ZNTAB 15WT%-E16, ZNTAB 15WT%-E15, ZNTAB 15WT%-E16-(1), and ZNTAB 15WT%-E16-(2) or ZNTAB 15WT%-E34 manufactured by C.I. Kasei Co., Ltd.

The (surface-coated) composite zinc oxide fine particles may be incorporated preferably in an amount (as solid content) of 0 to 50 % by weight, and more preferably 3 to 35 % by weight, based on the solid content in the scratch resistant coating composition. When the amount of the (surface-coated) composite zinc oxide fine particles as solid content is in excess of 50 % by weight, formation of a coating having visible light transparency and scratch resistance may become difficult.

Next, the organic UV absorber is described. Examples of the organic UV absorber include derivatives of a compound having hydroxybenzophenone, benzotriazole, cyanoacrylate, or triazine as its a main skeleton and a (co)polymers such as vinyl polymer having such UV absorber incorporated in its side chain. Exemplary UV absorbers include

2,4-dihydroxybenzophenone, 2,2' ,4,4'-tetrahydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-n-benzyloxybenzophenone, 2,2'-dihydroxy-4,4'-dimethoxybenzophenone, 2,2'-dihydroxy-4,4'-diethoxybenzophenone, 2,2'-dihydroxy-4,4'-dipropoxybenzophenone, 2,2'-dihydroxy-4,4'-dibutoxybenzophenone, 2,2'-dihydroxy-4-methoxy-4'-propoxybenzophenone, 2,2'-dihydroxy-4-methoxy-4'-butoxybenzophenone, 2,3,4-trihydroxybenzophenone, 2-(2-hydroxy-5-t-methylphenyl)benzotriazole, 2-(2-hydroxy-5-t-octyl phenyl)benzotriazole, 2-(2-hydroxy-3,5-di-t-butylphenyl)benzotriazole, ethyl-2-cyano-3,3-diphenyl acrylate, 2-ethylhexyl-2-cyano-3,3'-diphenyl acrylate, 2-(2-hydroxy-4-hexyloxyphenyl)-4,6-diphenyltriazine, (co)polymers of 2-hydroxy-4-(2-acryloxyethoxy) benzophenone, (co)polymers of 2-(2'-hydroxy-5'-methacryloxyethylphenyl)-2H-benzotriazole,
the reaction product of 2,4-dihydroxybenzophenone and γ-glycidoxypropyltrimethoxysilane,
the reaction product of 2,2',4,4'-tetrahydroxybenzophenone and γ-glycidoxypropyltrimethoxysilane, and (partial) hydrolysates thereof. In view of the long term weatherability, the preferred are triazine UV absorbers such as 2-(2-hydroxy-4-hexyloxyphenyl)-4,6-diphenyltriazine. These organic UV absorbers may be used alone or in combination of two or more.

When incorporated as the component (2-i), the organic UV absorber is preferably incorporated at 0 to 30 % by weight, more preferably at 0.3 to 25 % by weight, and still more preferably at 0.5 to 20 % by weight based on the solid content of the scratch resistant coating composition. When incorporated at an amount in excess of 30 % by weight, the resulting film may suffer from insufficient scratch resistance as well as poor adhesion to the substrate (1).

Next, the silica fine particles of (2-ii) is described. The silica fine particles (2-ii) is a dispersion of silica fine particles having a diameter of 5 to 200 nm, and preferably 5 to 40 nm dispersed in water, an organic solvent, or (meth)acrylic monomer. The silica fine particles may be any one of the silica fine particles dispersed in water, an organic solvent, or a (meth)acrylic monomer, and the preferred is the silica fine particles dispersed in water when the silicone resin (2-iii) is used for the binder of the scratch resistant coating film. In the case of the silica fine particles dispersed in water, the silica fine particles have numerous hydroxy groups attached to its surface, and these hydroxy groups bond to the silanol in the silicone resin, and this enables production of a plastic laminate having an excellent scratch resistance.

The dispersion of the silica fine particles in water are classified into the one dispersed in an acidic aqueous solution and the one dispersed in a basic aqueous solution. The silica fine particle dispersion in water may be any of the dispersion in an acidic aqueous solution and the dispersion in a basic aqueous solution. However, the use of a dispersion in an acidic aqueous solution is preferable in view of wider variety of the curing catalyst that can be chosen, and also, in view of realizing adequate hydrolysis and condensation of the alkoxysilane as will be described later.

Examples of commercially available silica fine particles dispersed in an acidic aqueous solution include SNOWTEX O from Nissan Chemical Industries Ltd. and Cataloid SN from Catalysts & Chemicals Ind. Co., Ltd., and examples of commercially available silica fine particles dispersed in a basic aqueous solution include SNOWTEX 30 and SNOWTEX 40 from Nissan Chemical Industries Ltd. and Cataloid S30 and Cataloid S40 from Catalysts & Chemicals Ind. Co., Ltd.

When compound (2-v) having two or more (meth)acrylic groups per molecule is used for the binder of the scratch resistant coating film, the use of the silica fine particles dispersed in an organic solvent is preferable. Furthermore, in consideration of forming a strong bond between the particles and the binder, the silica fine particles dispersed in an organic solvent are preferably those having their surface treated with a (meth)acrylic functional silane such as methacryloxypropyltrimethoxysilane or acryloxypropyltrimethoxysilane.

Examples of commercially available dispersion in an organic solvent include MA-ST, IPA-ST, NBA-ST, IBA-ST, EG-ST, XBA-ST, NPC-ST, and DMAC-ST from Nissan Chemical Industries Ltd. and OSCAL1132, OSCAL1232, OSCAL1332, OSCAL1432, OSCAL1532, OSCAL1632, and OSCAL1732 from Catalysts & Chemicals Ind. Co., Ltd.

Alternatively, the silica fine particles (2-ii) may be the silica fine particles (2-ii) dispersed in the (meth)acrylic monomer or the compound having two or more (meth)acrylic groups per molecule (2-v) described later. In this case, the dispersion may be accomplished by any method known in the art such as physical dispersion of the silica fine particles in the (meth)acrylic group-containing compound by using a dispersant or dispersing apparatus.

The silica fine particles (2-ii) may be incorporated in an amount of 1 to 100 % by weight, preferably 5 to 100 % by weight, and more preferably 5 to 50 % by weight based on the solid content of the scratch resistant coating composition.

The silicone resin (2-iii) used in the present invention is the silicone resin produced by (co)hydrolytic condensation of at least one member selected from the alkoxysilanes represented by the following general formula (5):

$$(R^7)_m(R^8)_nSi(OR^9)_{4-m-n} \qquad (5)$$

wherein $R^7$ and $R^8$ are independently hydrogen atom or an unsubstituted or substituted monovalent hydrocarbon group with the proviso that $R^7$ and $R^8$ may together represent a cyclic structure; $R^9$ is an alkyl group containing 1 to 3 carbon atoms; m and n are independently 0 or 1 with the proviso that m+n is 0, 1, or 2; and partial hydrolytic condensate thereof.

In formula (5), $R^7$ and $R^8$ are independently hydrogen atom or an unsubstituted or substituted monovalent hydrocarbon group containing 1 to 12 carbon atoms, and more preferably 1 to 8 carbon atoms, for example, hydrogen atom; an alkyl group such as methyl group, ethyl group, propyl group, butyl group, pentyl group, hexyl group, heptyl

group, or octyl group; a cycloalkyl group such as cyclopentyl group or cyclohexyl group; an alkenyl group such as vinyl group or allyl group; an aryl group such as phenyl group; a halogen-substituted hydrocarbon group such as chloromethyl group, γ-chloropropyl group, or 3,3',3"-trifluoropropyl group; a hydrocarbon group substituted with (meth)acryloxy, epoxy, mercapto, amino, or isocyanate group such as γ-methacryloxypropyl group, γ-glycidoxypropyl group, 3,4-epoxycyclohexylethyl group, γ-mercaptopropyl group, γ-aminopropyl group, or γ-isocyanatepropyl group. $R^7$ and $R^8$ may also represent isocyanurate group formed by the bonding of two or more isocyanate-substituted hydrocarbon groups. Of these, an alkyl group is preferable for use in an application requiring scratch resistance or weatherability, and a hydrocarbon group substituted with epoxy, (meth)acryloxy, or isocyanurate group is preferable for use in an application requiring toughness or ease of dyeing.

$R^9$ is an alkyl group containing 1 to 3 carbon atoms, for example, methyl group, ethyl group, n-propyl group, or i-propyl group. Of these, the preferred are methyl group and ethyl group in view of the high reactivity in the hydrolytic condensation, high vapor pressure of the resulting alcohol $R^3OH$, and ease of removal by distillation.

Examples of the silicone resin represented by the formula (5) include the case when m = 0 and n = 0, namely, a tetraalkoxysilane represented by the general formula: $Si(OR^9)_4$ and partial hydrolytic condensates thereof (2-iii-a). Examples of such tetraalkoxysilane or the partial hydrolytic condensate thereof include tetramethoxysilane, tetraethoxysilane, tetraisopropoxysilane, tetrabuthoxysilane, partial hydrolytic condensates of tetramethoxysilane such as those commercially available under the trade names of "M Silicate 51" manufactured by Tama Chemicals Co., Ltd., "MSI51" manufactured by COLCOAT CO., Ltd., and "MS51" and "MS56" manufactured by Mitsubishi Chemical Corporation; partial hydrolytic condensates of tetraethoxysilane such as those commercially available under the trade names of "Silicate 35" and "Silicate 45" manufactured by Tama Chemicals Co., Ltd., and "ESI40" and "ESI48" manufactured by COLCOAT CO., Ltd.; and co-partial hydrolytic condensates of tetramethoxysilane and tetraethoxysilane such as those commercially available under the trade names of "FR-3" manufactured by Tama Chemicals Co., Ltd. and "EMSi48" manufactured by COLCOAT CO., Ltd..

Examples of the silicone resin represented by the formula (5) include the case when m = 1 and n = 0 or when m = 0 and n = 1, namely, a trialkoxysilane represented by the general formula: $R^7Si(OR^9)_3$ or $R^8Si(OR^9)_3$ and partial hydrolytic condensates thereof (2-iii-b). Examples of such trialkoxysilane or its partial hydrolytic condensate include hydrogen trimethoxysilane, hydrogen triethoxysilane, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyl triethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)aminopropyltrimethoxysilane, γ-isocyanate propyltrimethoxysilane, γ-isocyanatepropyltriethoxysilane, tris(3-trimethoxysilylpropyl)isocyanurate, and tris(3-triethoxysilylpropyl)isocyanurate wherein two isocyanate groups together represent a cyclic structure, partial hydrolytic condensates of methyltrimethoxysilane sold under the trade names of "KC-89S" and "X-40-9220" manufactured by Shin-Etsu Chemical Co., Ltd., a partial hydrolytic condensate of methyltrimethoxysilane and γ-glycidoxypropyltrimethoxysilane sold under the trade name of "X-41-1056" manufactured by Shin-Etsu Chemical Co., Ltd.

Examples of the silicone resin represented by the formula (5) include the case when m = 1 and n = 1, namely, a dialkoxysilane represented by the general formula: $(R^7)(R^8)Si(OR^9)_2$ and partial hydrolytic condensates thereof (2-iii-c). Examples of such dialkoxysilane or its partial hydrolytic condensate include methyl hydrogen dimethoxysilane, methyl hydrogen diethoxysilane, dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercapto propylmethyldimethoxysilane, γ-aminopropylmethyldiethoxysilane, and N-(2-aminoethyl)aminopropylmethyldimethoxysilane.

The silicone resin (2-iii) may be prepared by using the alkoxysilanes (2-iii-a, b, c) as described above in any desired ratio. However, for realizing an improved scratch resistance and crack resistance, 0 to 50 % of Si by mole of (2-iii-a), 50 to 100 % of Si by mole of (2-iii-b), and 0 to 10 % of Si by mole of (2-iii-c), and more preferably, 0 to 30 % of Si by mole of (2-iii-a), 70 to 100 % of Si by mole of (2-iii-b), and 0 to 10 % of Si by mole of (2-iii-c) are used in relation to 100 % of Si by mole the total of alkoxysilanes (2-iii-a), (2-iii-b), and (2-iii-c). When the main component (2-iii-b) is used at less than 50 % of Si by mole, the silicone resin will suffer from insufficient crosslinking density, and hence, insufficient curability and hardness of the hardened film. On the other hand, when the (2-iii-a) is used at an amount in excess of 50 % of Si by mole, the crosslinking density of the silicone resin will be too high, and this may result in the loss of toughness, and hence, difficulty in preventing cracks.

It is to be noted that "% of Si by mole" is the proportion by mole of the Si in the entire Si, and the "% of Si by

mole" in the case of a monomer is calculated by using its molecular weight as 1 mole, and in the case of a dimer, the "% of Si by mole" is calculated by using the average molecular weight divided by 2 as 1 mole.

In producing the silicone resin (2-iii), component (2-iii-a, b, c) are subjected to (co)hydrolytic condensation by a method known in the art. For example, the alkoxysilanes or their partial hydrolytic condensates (2-iii-a, b, c) as single alkoxysilane or a mixture of the alkoxysilanes is subjected to (co)catalytic condensation by using water at a pH of 1 to 7.5, and preferably 2 to 7. This process may be conducted by using a dispersion of metal oxide fine particles such as silica fine particles in water. A catalyst may be added to the system for adjusting its pH to the described range and to promote hydrolysis. Suitable catalysts include organic and inorganic acids such as hydrogen fluoride, hydrochloric acid, nitric acid, formic acid, acetic acid, propionic acid, oxalic acid, citric acid, maleic acid, benzoic acid, malonic acid, glutaric acid, glycolic acid, methanesulfonic acid, and toluenesulfonic acid; a solid acid catalyst such as cation-exchange resin having a carboxylic acid group or sulfonic acid group on its surface; or a dispersion metal oxide fine particles in water of such as dispersion of silica fine particles in acidic water. Alternatively, a dispersion of metal oxide fine particles such as silica fine particles in water or an organic solvent may be co-present in the hydrolysis.

For the hydrolysis, water may be used in an amount of 20 to 3,000 parts by weight per 100 parts by weight of the total of the alkoxysilanes (2-iii-a, b, c) and/or the partial hydrolytic condensate thereof. An excess amount of water may not only lead to reduction of the system efficiency, but also give rise to a problem of the remaining water adversely affecting to detract from coating and drying efficiencies. To further improve storage stability, scratch resistance, and crack resistance, the amount of water used is preferably from 50 parts to 200 parts by weight. Use of water below this range may produce a silicone resin whose weight average molecular weight does not build up to reach the optimum range to be described later, the molecular weight being determined by GPC versus polystyrene standards. On the other hand, when the water used is in excess of such range, the unit represented by the formula: $R'SiO_{3/2}$ (wherein R' is $R^7$ or $R^8$) in the unit represented by the formula: $R'SiO_{(3-p)/2}(OX)_p$ wherein R' is as defined above; X is hydrogen atom or $R^9$; $R^7$, $R^8$, and $R^9$ is as defined above; and p is an integer of 0 to 3) derived from the starting material (2-iii-b) may not build up to reach the optimum range required for maintaining the crack resistance of the coating film.

The hydrolysis may be carried out by adding dropwise or dumping water to the alkoxysilane or the partial hydrolytic condensate thereof, or inversely, by adding dropwise or dumping the alkoxysilane or the partial hydrolytic condensate thereof to the water. An organic solvent may be present in the reaction solution while the absence of such organic solvent is preferable because the presence of an organic solvent is likely to result in the lower molecular weight of the resulting silicone resin as measured by GPC versus polystyrene standards.

To produce the silicone resin (2-iii), the hydrolysis as described above must be followed by condensation. The condensation may be effected continuous to the hydrolysis while maintaining the liquid temperature at room temperature or heating to a temperature not higher than 100°C since a temperature in excess of 100°C may cause gelation. Condensation may be promoted by distilling off the alcohol or ketone formed by the hydrolysis at a temperature of at least 80°C and atmospheric or subatmospheric pressure. A condensation catalyst such as a basic compound, an acidic compound, or a metal chelate may also be added for the purpose of promoting the condensation. Prior to or during the condensation step, an organic solvent may be added for the purpose of adjusting the progress of the condensation or the concentration, or a dispersion of metal oxide fine particles such as silica fine particles in water or an organic solvent may also be added. Since the silicone resin generally builds up its molecular weight and reduces its solubility in water or alcohol which is formed as the condensation proceeds, the organic solvent added herein is preferably the one having a boiling point of at least 80°C and a relatively high polarity in which the silicone resin is fully soluble. Examples of such organic solvent include alcohols such as isopropyl alcohol, n-butanol, isobutanol, t-butanol, and diacetone alcohol; ketones such as methyl propyl ketone, diethyl ketone, methyl isobutyl ketone, and cyclohexanone; ethers such as dipropyl ether, dibutyl ether, anisole, dioxane, ethylene glycol monoethyl ether, ethylene glycol monobutyl ether, propylene glycol monomethyl ether, and propylene glycol monomethyl ether acetate; and esters such as propyl acetate, butyl acetate, and cyclohexyl acetate.

The silicone resin resulting from this condensation may preferably have a weight average molecular weight of at least 1,500, more preferably 1,500 to 50,000, and still more preferably 2,000 to 20,000, as measured by GPC versus polystyrene standards. When the molecular weight is below this range, the coating tends to have a low toughness and cracks are likely to be generated. On the other hand, a polysiloxane with unduly high molecular weight may result in an insufficient hardness, and the resin in the coating may undergo phase separation, causing whitening.

Component (2-iv) is a curing catalyst which may be selected from those catalysts commonly used in silicon coating compositions. The curing catalyst serves to promote condensation reaction of condensable groups such as silanol and alkoxy groups in silicone resin (2-iv). Exemplary such catalysts include basic compounds such as lithium hydroxide, sodium hydroxide, potassium hydroxide, sodium methylate, sodium propionate, potassium propionate, sodium acetate, potassium acetate, sodium formate, potassium formate, trimethylbenzylammonium hydroxide, tetramethylammonium hydroxide (TMAH), tetramethylammonium acetate, n-hexylamine, tributylamine, diazabicycloundecene (DBU), and dicyandiamide; metal-containing compounds such as tetraisopropyl titanate, tetrabutyl titanate, acetylacetonatotitanium, aluminum triisobutoxide, aluminum triisopropoxide, tris(acetylacetonato)aluminum, aluminum diisopropoxy(ethyl

acetoacetate), aluminum perchlorate, aluminum chloride, cobalt octylate, (acetylacetonato)cobalt, (acetylacetonato)iron, (acetylacetonato)tin, dibutyltin octylate, and dibutyltin laurate; and acidic compounds such as p-toluenesulfonic acid and trichloroacetic acid. Of these, the preferred are sodium propionate, sodium acetate, sodium formate, trimethylbenzylammonium hydroxide, tetramethylammonium hydroxide, tris(acetylacetonato)aluminum, and aluminum diisopropoxy(ethyl acetoacetate).

Another useful curing catalyst is a compound not containing any aromatic group in the molecule represented by the following general formula (6):

$$[(R^{10})(R^{11})(R^{12})(R^{13})M]^{+}\cdot X^{-} \qquad (6)$$

wherein $R^{10}$, $R^{11}$, $R^{12}$, and $R^{13}$ independently represent an alkyl group containing 1 to 18 carbon atoms which is optionally substituted with a halogen atom, each of $R^{10}$, $R^{11}$, $R^{12}$, and $R^{13}$ having a Taft-Dubois steric substituent constant Es and total of the constants Es of $R^{10}$, $R^{11}$, $R^{12}$, and $R^{13}$ being up to -0.5; M is ammonium cation or phosphonium cation; and $X^-$ is a halogen anion, hydroxide anion, or a carboxylate anion containing 1 to 4 carbon atom. The silicone coating composition loaded with this catalyst becomes shelf stable while remaining curable and crack resistant.

Taft-Dubois steric substituent constant Es is a rate of esterification reaction of a substituted carboxylic acid under acidic conditions relative to methyl group $CH_3$, and this constant Es is represented by the equation:

$$Es = \log(k/k0)$$

wherein k is the rate of acidic esterification reaction of a substituted carboxylic acid under specific conditions and k0 is the rate of acidic esterification reaction of methyl-substituted carboxylic acid under the same conditions. See J. Org. Chem., 45, 1164 (1980) and J. Org. Chem., 64, 7707 (1999).

In general, Taft-Dubois steric substituent constant Es is an index representing the steric bulkiness of a substituent. For example, the value of constant Es is 0.00 for methyl, -0.08 for ethyl, -0.31 for n-propyl, and -0.31 for n-butyl, indicating that the lower (or more negative) the Es, the more sterically bulky is the substituent.

In the present invention, the total of the constants Es of $R^{10}$, $R^{11}$, $R^{12}$, and $R^{13}$ of formula (6) should be equal to or less than -0.5. When the total of the constants Es is above -0.5, the coating composition will suffer from low shelf stability and forms a coating which will exhibit cracks and whitening in the water-resistant test with poor adhesion, especially poor water-resistant adhesion and boiling adhesion. When the total of the constants Es is greater than -0.5, for example, when $R^{10}$, $R^{11}$, $R^{12}$, and $R^{13}$ are all methyl group, the corresponding catalyst of formula (5) will have a high in catalytic activity, but the coating composition will have low shelf stability and the coating will be highly hygroscopic with the risk of developing defects in the water-resistant test. The total of the constants Es of $R^{10}$, $R^{11}$, $R^{12}$, and $R^{13}$ is preferably not less than -3.2, and more preferably not less than -2.8.

In the above formula, $R^{10}$, $R^{11}$, $R^{12}$, and $R^{13}$ are independently an alkyl group containing 1 to 18 carbon atoms, and preferably 1 to 12 carbon atoms, which may be substituted with a halogen. Exemplary such groups include alkyl groups such as methyl group, ethyl group, propyl group, butyl group, pentyl group, hexyl group, heptyl group, and octyl group; cycloalkyl groups such as cyclopentyl group and cyclohexyl group; and halogen-substituted alkyl groups such as chloromethyl group, γ-chloropropyl group, and 3,3,3-trifluoropropyl group.

M is ammonium cation or phosphonium cation. $X^-$ is a halogen anion, hydroxide anion, or carboxylate anion containing 1 to 4 carbon atoms, and preferably, hydroxide anion or acetate anion.

Examples of such curing catalysts include hydroxides such as tetra-n-propylammonium hydroxide, tetra-n-butylammonium hydroxide, tetra-n-pentylammonium hydroxide, tetra-n-hexylammonium hydroxide, tetracyclohexylammonium hydroxide, tetrakis(trifluoromethyl)ammonium hydroxide, trimethylcyclohexylammonium hydroxide, trimethyl(trifluoromethyl)ammonium hydroxide, trimethyl-t-butylammonium hydroxide, tetra-n-propylphosphonium hydroxide, tetra-n-butylphosphonium hydroxide, tetra-n-pentylphosphonium hydroxide, tetra-n-hexylphosphonium hydroxide, tetracyclohexylphosphonium hydroxide, tetrakis(trifluoromethyl)phosphonium hydroxide, trimethylcyclohexylphosphonium hydroxide, trimethyl(trifluoromethyl)phosphonium hydroxide, and trimethyl-t-butylphosphonium hydroxide; salts of such hydroxides with a halogenic acid; and salts of such hydroxides with a carboxylic acid containing 1 to 4 carbon atoms. Of these, the preferred are tetrapropylammonium hydroxide, tetrapropylammonium acetate, tetrabutylammonium hydroxide, tetrabutylammonium acetate, tetrabutylphosphonium hydroxide, and tetrabutylphosphonium acetate. These may be used alone, in combination of two or more, or in combination with other known curing catalysts as described above.

The curing catalyst (2-iv) may be incorporated at an amount sufficient for curing the silicone resin (2-iii), and the amount is not particularly limited. The curing catalyst (2-iv), however, may be typically used in an amount of preferably 0.0001 to 30 % by weight, and more preferably 0.001 to 10 % by weight based on the solid content of the silicone coating composition. When used in an amount less than 0.0001 % by weight, curing will be insufficient in some cases with reduced hardness. The use in excess of 30 % by weight may result in higher likeliness of crack generation and poor

water resistance.

Next, components (2-i), (2-ii), (2-v), and (2-vi) used for the radiation curable (meth)acrylic coating composition for the scratch resistant coating (2) are described. (2-i) and (2-ii) are as described above.

The compound having two or more (meth)acrylic groups per molecule (the component (2-v)) is not particularly limited as long as it contains two or more (meth)acrylic groups in one molecule. Non-limiting exemplary such compound include 1,6-hexanediol di(meth)acrylate, triethylene glycol di(meth)acrylate, ethylene oxide-modified bisphenol A di(meth)acrylate, trimethylolpropane tri(meth)acrylate, pentaerythritol tetra(meth)acrylate, ditrimethylolpropane tetra(meth)acrylate, dipentaerythritol hexa(meth)acrylate, pentaerythritol tri(meth)acrylate, 3-(meth)acryloyloxy glycerin mono(meth)acrylate, urethane acrylate, and epoxyacrylate, polyester acrylate, which may be used alone or in combination of two or more. This component (2-v) is the main curing component of the (meth)acryl coating composition, and forms the matrix of the resulting cured coating film.

The photopolymerization initiator (2-vi) is preferably a radical photopolymerization initiator. The radical photopolymerization initiators may be selected from those commonly used in the art such as acetophenone photopolymerization initiators, benzoin photopolymerization initiators, acylphosphine oxide photopolymerization initiators, benzophenone photopolymerization initiators, and thioxanthone photopolymerization initiators. Examples include benzophenone, benzyl, Michler's ketone, thioxanthone derivative, benzoin ethyl ether, diethoxy acetophenone, benzyl dimethyl ketal, 2-hydroxy-2-methylpropiophenone, 1-hydroxycyclohexyl phenyl ketone, acylphosphine oxide derivative, 2-methyl-1-{4-(methylthio)phenyl}-2-morpholinopropan-1-one, 4-benzoyl-4'-methyldiphenyl sulfide, and 2,4,6-trimethylbenzoyldiphenylphosphine, which may be used alone or in combination of two or more. Of these, the preferred are benzyl dimethyl ketal, 1-hydroxycyclohexyl phenyl ketone, hydroxy dimethyl acetophenone, 2-methyl-1-{4-(methylthio)phenyl}-2-morpholinopropan-1-one, 4-benzoyl-4'-methyldiphenylsulfide, and 2,4,6-trimethylbenzoyldiphenylphosphine in view of the high surface curability.

The photopolymerization initiator (2-vi) may be incorporated at an amount of 0.1 to 20 % by weight, and preferably at 0.5 to 10 % by weight based on the solid content in the (meth)acryl coating composition. Incorporation in an amount less than 0.1 % by weight may result in poor curability whereas incorporation in excess of 20 % by weight may result in poor surface hardness.

The composition used for the formation of the scratch resistant coating film of the present invention preferably contains a solvent for dissolving or dispersing the components as described above. The solvent used is not particularly limited. The solvent, however, preferably contains a highly polar organic solvent as its main component. Exemplary organic solvent include alcohols such as methanol, ethanol, isopropyl alcohol, n-butanol, isobutanol, t-butanol, and diacetone alcohol; ketones such as methyl propyl ketone, diethyl ketone, methyl isobutyl ketone, cyclohexanone, and diacetone alcohol; ethers such as dipropyl ether, dibutyl ether, anisole, dioxane, ethylene glycol monoethyl ether, ethyleneglycol monobutyl ether, propylene glycol monomethyl ether, and propylene glycol monomethyl ether acetate; and esters such as ethyl acetate, acetic acid propyl, butyl acetate, and cyclohexyl acetate; which may be used alone or in combination of two or more selected from those as described above.

The scratch resistant coating composition used in the present invention may optionally contain a pH adjusting agent, a levelling agent, a thickener, a pigment, a dye, metal oxide fine particles, metal particles, an antioxidant, a UV absorber, a UV stabilizer, a heat ray-reflector or absorber, a flexibilizing agent, an antistatic agent, an antistaining agent, a water repellent and the like in line with conventional skill, but so as not to affect the properties adversely.

The scratch resistant coating composition used in the present invention can be prepared by mixing the predetermined amounts of the components as described above by the method commonly used in the art.

The thus obtained scratch resistant coating composition may be directly coated on the surface of the thermoplastic (meth)acrylic resin (1-ii) of the substrate laminate (1) and cured to produce an article coated with the coating film.

The scratch resistant coating composition may be coated on the substrate by a method commonly used in the art adequately selected from brush coating, spraying, dipping, flow coating, bar coating, roll coating, curtain coating, spin coating, knife coating, and the like.

When the scratch resistant coating composition used is a heat curable silicone coating composition, the drying may be accomplished by air drying by leaving in the air or by heating. While the time and temperature used for the curing are not particularly limited, the curing is preferably conducted at a temperature not higher than the heat resistant temperature of the substrate for 10 minutes to 2 hours. More specifically, the curing is preferably conducted by heating at 80 to 135°C for 30 minutes to 2 hours.

When the scratch resistant coating composition used is a photo curable (meth)acrylic coating composition, the composition may be cured by light irradiation. The source of light used for the curing is typically the one capable of irradiating a light beam having a wavelength in the range of 200 to 450 nm, for example, a high pressure mercury lamp, super high pressure mercury lamp, metal halide lamp, xenon lamp, and carbon arc lamp. The dose of the irradiation is not particularly limited. However, irradiation of 10 to 5,000 mJ/cm$^2$, and in particular, 20 to 1,000 mJ/cm$^2$ is preferable. The curing is typically conducted for 0.5 second to 2 minutes, and preferably 1 second to 1 minute.

The scratch resistant coating cured film (2) is not limited for its thickness, and the thickness may be adequately

selected depending on the application.

Preferably, the film (2) has a thickness of 0.1 to 50 μm, and in particular, 1 to 30 μm in view of the hardness, scratch resistance, long term stability of the adhesion, and crack prevention of the coating film.

One characteristic feature of the polycarbonate resin laminate of the present invention is its transparency for the visible light, and an upper limit for haze of the laminate is used as an index of such light transparency. In general, haze increases with the increase in the thickness of the film, and in the present invention, the polycarbonate resin laminate preferably has a haze of up to 2 %, and preferably up to 1%. The haze of the film used herein is as measured by Turbidimeter NDH 2000 manufactured by Nippon Denshoku Industries Co., Ltd., e.g. by ASTM D1003 or JIS K7105.

Another characteristic feature of the polycarbonate resin laminate of the present invention is its scratch resistance of the laminate, and an upper limit for scratch resistance ΔHz on the side of the surface of the scratch resistant coating is used as an index of such scratch resistance. The ΔHz is difference of scratch resistance analyzed according to ASTM 1044 by mounting a Taber abrasion tester with abrasive wheels CS-10F, measuring the haze after 500 cycles under a load of 500 g, and calculating the difference (ΔHz) before and after the test. ΔHz is typically up to 15.0, preferably up to 13.0, and more preferably up to 10.0.

A further characteristic feature of the polycarbonate resin laminate of the present invention is its weatherability, and an upper limit for change of the yellowing index (ΔYI) or an upper limit for crack generation time in the weatherability test of the laminate is used as an index of such scratch resistance. The ΔYI and the crack generation in the weatherability test was determined by using EYE Super UV Tester W-151 manufactured by Iwasaki Electric Co., Ltd. by repeating weathering cycles for 100 hours and 200 hours. Each weathering cycle was conducted by [5 hours at black panel temperature of 63°C, relative humidity of 50 %, illuminance of 50 $mW/cm^2$, and raining of 10 sec/hour] followed by [1 hour at black panel temperature of 30°C and relative humidity of 95 %]. In the weathering test, the polycarbonate resin laminate should preferably exhibit a ΔYI of up to 3 and no crack generation. The ΔYI is measured by optical sensor Z-300A (manufactured by Nippon Denshoku Industries Co., Ltd.), and the cracks are visually observed.

If desired, the polycarbonate resin laminate of the present invention may have a UV absorbing layer, printed layer, recording layer, heat ray shielding layer, tackifying layer, inorganic vapor deposition layer or the like, directly or indirectly disposed on its surface.

## EXAMPLES

Next, the present invention is described in further detail by referring to Synthetic Examples, Examples, Reference Examples and Comparative Examples. It is to be noted that, in the following Examples, "%" means "% by weight" and "parts" means "parts by weight", and the viscosity is the value at 25°C measured by the procedure according to JIS Z8803. The weight average molecular weight is the value measured by gel permeation chromatography (GPC) versus polystyrene standards.

### Production Example 1

(Production of thermoplastic (meth)acrylic resin)

82 parts of methyl methacrylate, 10 parts of 2-[2'-hydroxy-5'-(2-methacryloxyethyl)phenyl]-2H-benzotriazole (RUVA-93, manufactured by Otsuka Chemical Co., Ltd.), 8 parts of methanol, 0.032 parts ($2\times10^{-3}$ mole/L) of di-t-butyl peroxide, and 0.21 parts ($10\times10^{-3}$ mole/L) of n-dodecylmercaptan were mixed, and dissolved oxygen was removed from the mixture by introducing nitrogen to prepare the starting solution. A polymerization tank having an internal volume of 6 L equipped with a heat medium-circulating jacket and a helical ribbon agitation blade was charged with 5 kg of this starting solution, and after sealing the tank and with thorough agitation to maintain homogeneously mixed conditions, temperature was raised to 150°C to promote the polymerization until the monomer conversion rate reached 75 % and the polymer concentration reached 69 %. This starting solution was continuously supplied to a polymerization tank at a rate of 1 kg/h.

When the polymerization temperature was maintained at 150°C and the average residence time was adjusted to about 5 hours, the polymerization solution was stable at the viscosity of 50 Pa·s, the monomer conversion rate of 75 %, and the polymer concentration of 70 %. This polymerization was discharged at a flow rate of 1 kg/h, and after heating to 250°C, flashed to a devolatilizing tank which was maintained at a reduced pressure. The devolatilized polymer in molten state was discharged from the bottom of the devolatilizing tank, and extruded from a die in strand form. After cooling with water, the polymer was pelletized in a pelletizer. The resulting pellets contained 0.27 % of methyl methacrylate as the residual volatile component, and the polymerization initiator and the chain transfer agent (n-dodecylmercaptan) were not observed in the GC analysis. The resulting colorless transparent pellets had good outer appearance, a weight average molecular weight (Mw) of 103,000 as measured by GPC, and a glass transition temperature of 101°C.

Production Example 2

(Production of co-extruded sheet substrate for use in the Examples)

A polycarbonate resin (E-2000U, manufactured by Mitsubishi Gas Chemical Company, Inc.) having a weight average molecular weight of 63,000 was extruded from an extruder having a barrel diameter of 65 mm and a L/D of the screw of 35 at a cylinder temperature of 270°C. The thermoplastic (meth)acrylic resin for the coating layer was a resin prepared by mixing the (meth)acrylic resin produced in Production Example 1 with 0.1 % of Sumilizer BHT (manufactured by Sumitomo Chemical Co., Ltd.) and 0.05 % of ADK STAB PEP-36 (manufactured by Asahi Denka Co., Ltd.) as antioxidants, and this resin was extruded from an extruder having a barrel diameter of 32 mm and a L/D of the screw of 32 at a cylinder temperature of 250°C. These two resins were simultaneously extruded, and laminated by using a feed block having a width of 500 mm to thereby produce a laminate having the (meth)acrylic resin deposited on one surface of the polycarbonate resin. The temperature in the die head was 260°C, and the resin laminated in the die was guided to mirror-finished three pairs of polishing rolls, the first rolls being set at a temperature of 110°C, the second rolls at 180°C, and the third rolls at 180°C. A bank was allowed to form at the interval of the initial rolls, and the sheet was then guided to the second and the third rolls at a take up speed of 1.2 m/minute and a take up pinch roll speed of 1.6 m/minute. The resulting sheet substrate (SUB-1) had a thickness of 0.9 mm with the (meth)acrylic resin coating layer of 20 μm and a good outer appearance with no spots or streaks.

Production Example 3

(Production of co-extruded sheet substrate for use in the Comparative Examples)

A sheet was produced by using the apparatus and production conditions similar to those of Production Example 2. The thermoplastic (meth)acrylic resin used was a resin prepared by mixing Atoglass V020 manufactured by Atofina by continuous solution polymerization method with 3 % of Tinuvin 1577 (manufactured by Ciba Specialty Chemicals) as a UV absorber and 0.1 % of Sumilizer BHT (manufactured by Sumitomo Chemical Co., Ltd.) and 0.05 % of ADK STAB PEP-36 (manufactured by Asahi Denka Co., Ltd.) as antioxidants. The resulting sheet substrate (SUB-2) had a good outer appearance with no spots or streaks.

Dispersion of surface coated composite zinc oxide fine particles of component (2-i) and organic UV absorber

2-i-A: ZNTAB 15WT%-E16 (2) manufactured by C. I. Kasei Co., Ltd. (a dispersion prepared by coating zinc oxide fine particles manufactured by DC arc plasma process with silica, surface treating with methyltrimethoxysilane, and then dispersing in a mixed alcohol by using a dispersant; having a solid concentration of 15 % and an average particle diameter (volume average particle diameter $D_{50}$) of 105 nm).

2-i-B: Tinuvin 400 (hydroxyphenyl triazine UV absorber) manufactured by Ciba Specialty Chemicals).

F-1: Dispersion of titanium oxide fine particles (Optolake 1120Z (11RU-7-A8) manufactured by JGC Catalysts and Chemicals Ltd. having a solid concentration of 20 %).

Measurement of photocatalytic activity of the dispersion of surface coated composite zinc oxide fine particles of component (2-i)

A dispersion of the (surface-coated) composite zinc oxide fine particles (2-i-A) or a dispersion of titanium oxide fine particles (F-1; Optolake 1120Z (11RU-7-A8) manufactured by JGC Catalysts and Chemicals Ltd. having a solid concentration of 20 %) was added to 20 g of methylene blue solution in water/methanol (weight ratio, 1:1) having a methylene blue concentration of 0.01 mmol/L so that the concentration of the solid content (namely, the oxide fine particles) in the solution was 0.15 g. The solution was stirred in the dark for 30 minutes, and then irradiated with a 15 W black light for 12 hours. Thereafter, the solution was centrifuged at 3,000 rpm for 15 minutes to collect the supernatant, and the absorbance of methylene blue at 653 nm was measured by a UV/visible spectrophotometer. The photocatalytic degradability was calculated by the following equation. The results are shown in Table 1.

$$\text{Photocatalytic degradability (\%)} = [(A0-A)/A0] \times 100$$

wherein A0 is the initial absorbance and A is the absorbance after the black light irradiation.

Synthesis of heat curable silicone coating composition Synthetic Example 1

A 2L flask was charged with 287 g (2.11 moles of Si) of methyltrimethoxysilane, and after cooling to a temperature of about 10°C, 211 g of SNOWTEX O (manufactured by Nissan Chemical Industries, Ltd.; a dispersion of silica fine particles in water having an average particle diameter of 15 to 20 nm and a $SiO_2$ content of 20 %) and 93 g of 0.25N aqueous solution of acetic acid were added dropwise, and the mixture was hydrolyzed while cooling the mixture so that the internal temperature would not exceed 40°C. After the dropwise addition, the solution was stirred at a temperature of up to 40°C for 1 hour, and then at 60°C for 3 hours to complete the hydrolysis.

300 g of cyclohexanone was then added, and methanol generated in the hydrolysis was removed by distillation at standard pressure until the temperature reached 92°C while condensation was promoted. 400 g of isopropanol as a diluent, and 0.5 g of KP-341 (manufactured by Shin-Etsu Chemical Co., Ltd.) as a leveling agent, 1.6 g of acetic acid, and 1.6 g of 25 % aqueous solution of tetramethylammonium hydroxide (TMAH) were added. After stirring the mixture, the mixture was filtered through a filter paper to obtain a colorless silicone resin solution having an involatile concentration of 19.2 %, a weight average molecular weight as determined by GPC versus polystyrene standards of 2,510, and a degree of dispersion of 1.84. To 100 parts of this silicone resin solution, 30 parts (gross) of the dispersion of surface coated composite zinc oxide fine particles (2-i-A) was added, and the mixture was stirred to obtain a heat curable silicone coating composition (Si-1).

Synthetic Example 2

To 100 parts of the silicone resin solution of Synthetic Example 1, 30 parts (gross) of the dispersion of surface coated composite zinc oxide fine particles (2-i-A) and 5 parts of the organic UV absorber (2-i-B) were added, and the mixture was stirred to obtain a heat curable silicone coating composition (Si-2).

Synthetic Example 3

To 100 parts of the silicone resin solution of Synthetic Example 1, 15 parts (gross) of the dispersion of titanium oxide fine particles (F-1) was added, and the mixture was stirred to obtain a heat curable silicone coating composition (Si-3).

Synthesis of photocurable (meth)acryl coating composition Synthetic Example 4

A one liter amber flask was charged with 80 parts of a dispersion of silica fine particles which had been treated with γ-methacryloxypropyltrimethoxysilane in ethoxylated pentaerythritol tetraacrylate (S-PETTA, silica concentration 50 %, average particle diameter 30 nm), 20 parts of hexanediol diacrylate, 3 parts of Darocure 1173 (manufactured by Ciba Specialty Chemicals) as a photopolymerization initiator, and 5 parts of Tinuvin 400 (manufactured by Ciba Specialty Chemicals) as an organic UV absorber (2-i-B), and the mixture was stirred at room temperature for 1 hour. The reaction mixture was then filtered through a mesh to obtain photocurable (meth)acryl coating composition (UV-1) having a viscosity of 180 mPa·s.

Production of polycarbonate laminate and its evaluation Example 1

The heat curable silicone coating composition (Si-1) produced in Synthetic Example 1 was coated by flow on the cleaned surface of the (meth)acrylic resin of the sheet substrate (SUB-1) produced in Production Example 2 so that a thickness after the curing becomes about 5 μm, and thermally cured at 130°C for 60 minutes. The resulting polycarbonate resin laminate was used for the test piece, and the physical properties as described below were evaluated. The results are shown in Table 2.

Example 2

The procedure of Example 1 was repeated by replacing the heat curable silicone coating composition (Si-1) with the heat curable silicone coating composition (Si-2) produced in Synthetic Example 2 to produce a polycarbonate resin laminate. The results of the physical property evaluation are shown in Table 2.

Example 3 (Reference)

The photocurable (meth)acryl coating composition (UV-1) produced in Synthetic Example 4 was coated by bar coating on the cleaned surface of the (meth)acrylic resin of the sheet substrate (SUB-1) produced in Production Example 2 so that a thickness after the curing becomes about 20 μm, and cured for 3 seconds with a light beam (an accumulated radiation dose of 300m J/$cm^2$) using 80 W high pressure mercury lamp. The resulting polycarbonate resin laminate was used for the test piece, and the physical properties as described below were evaluated. The results are shown in Table 2.

Comparative Examples 1 and 2

The procedure of Examples 1 and 2 was repeated using the compositions of Examples 1 and 2 by replacing the sheet substrate (SUB-1) produced in Production Example 2 with the sheet substrate (SUB-2) produced in Production Example 3 to produce a polycarbonate resin laminate. The results of the physical property evaluation are shown in Table 3.

Comparative Example 3

The procedure of Comparative Example 1 was repeated by replacing the heat curable silicone coating composition (Si-1) with the heat curable silicone coating composition (Si-3) produced in Synthetic Example 3 to produce a polycarbonate resin laminate. The results of the physical property evaluation are shown in Table 3.

Evaluation method of the polycarbonate resin laminate Transparency

The laminate was measured for its haze by a haze meter NDH 2000 (Nippon Denshoku Industries Co., Ltd.).

Scratch resistance

The scratch resistance was analyzed according to ASTM 1044 by mounting a Taber abrasion tester with abrasive wheels CS-10F, measuring the haze after 500 cycles under a load of 500 g, and calculating the difference (ΔHz) before and after the test.

Initial adhesion

The test piece was examined for its initial adhesion by a cross-hatch adhesion test according to JIS K5400, and more specifically, by scribing the sample with a razor along 6 longitudinal and 6 transverse lines at a spacing of 2 mm to define 25 square sections, tightly attaching Sellotape (registered trademark, manufactured by Nichiban Co., Ltd.) thereto, rapidly pulling back the adhesive tape at an angle of 90°, and counting the number (X) of sections where the coating remained unpeeled. The result is expressed as X/25.

Appearance and adhesion after water immersion

The test piece was immersed in boiling water for 2 hours, after which it was visually observed for appearance and examined for adhesion by the adhesion test as described above.

Weathering test

A weathering test was carried out using EYE Super UV Tester W-151 manufactured by Iwasaki Electric Co., Ltd. by repeating weathering cycles for 100 hours and 200 hours. Each weathering cycle was conducted by [5 hours at black panel temperature of 63°C, relative humidity of 50 %, illuminance of 50 mW/$cm^2$, and raining of 10 sec/hour] followed by [1 hour at black panel temperature of 30°C and relative humidity of 95 %]. Yellowing index (YI) was also measured according to JIS K7103 before and after the weathering test, and the weathered sample was also examined for cracks and delamination with naked eyes or under a microscope (250× magnifying power).

Yellowness index

A yellowing index (YI) was measured by using an optical sensor Z-300A (manufactured by Nippon Denshoku Industries Co., Ltd.) before and after the weathering test, and change of the yellowing index (ΔYI) was calculated.

Cracks after weathering test

The film appearance (generation of cracks) after the weathering test was rated according to the following criterion.

A: intact

B: some cracks

C: cracks on entire film

Delamination after weathering test

The film after the weathering test was rated according to the following criterion.

A: intact

B: some delamination

C: overall delamination

Table 1

| Photocatalytic activity of surface coated composite oxide fine particles | | | |
|---|---|---|---|
| Dispersion of surface coated composite oxide fine particles | blank | 2-i-A | F-1 |
| Initial absorbance at 653 nm | 1.275 | - | - |
| Absorbance at 653 nm after 12 hours of irradiation | - | 0.999 | 0.000 |
| Photocatalytic degradability (%) | - | 21.6 | 100 |

Table 2

| Polycarbonate resin laminate and the evaluation results | | | | |
|---|---|---|---|---|
| | | Example | | |
| | | 1 | 2 | 3 (Reference) |
| Substrate (1) | | SUB-1 | SUB-1 | SUB-1 |
| Scratch resistant coating film (2) | Silicone coating composition | Si-1 | Si-2 | - |
| | (Meth)acrylic coating composition | - | - | UV-1 |
| Evaluation results | | | | |
| Transparency, Hz (%) | | 0.6 | 1.4 | 0.1 |
| Scratch resistance ΔHz | | 6.5 | 9.2 | 6.8 |
| Initial adhesion | | 25/25 | 25/25 | 25/25 |
| Appearance after water immersion | | Normal | Normal | Normal |
| Adhesion after water immersion | | 25/25 | 25/25 | 25/25 |
| Weatherability after 100 hours | Yellowness index ΔYI | <1 | <1 | <1 |
| | Cracks | A | A | A |
| | Delamination | A | A | A |

(continued)

| Evaluation results | | | | |
|---|---|---|---|---|
| Weatherability after 200 hours | Yellowness index ΔYI | 4 | 3 | 7 |
| | Cracks | A | A | A |
| | Delamination | A | A | B |

Table 3

| Polycarbonate resin laminate and the evaluation results | | | | |
|---|---|---|---|---|
| | | Comparative Example | | |
| | | 1 | 2 | 3 |
| Substrate (1) | | SUB-2 | SUB-2 | SUB-1 |
| Scratch resistant coating film (2) | Silicone coating composition | Si-1 | - | Si-3 |
| | (Meth)acrylic coating composition | - | UV-1 | - |
| Evaluation results | | | | |
| Transparency, Hz (%) | | 0.6 | 0.3 | 0.2 |
| Scratch resistance ΔHz | | 6.8 | 5.9 | 5.3 |
| Initial adhesion | | 25/25 | 25/25 | 25/25 |
| Appearance after water immersion | | Whitening | Whitening | Normal |
| Adhesion after water immersion | | 20/25 | 10/25 | 25/25 |
| Weatherability after 100 hours | Yellowness index ΔYI | 1 | 2 | 15 |
| | Cracks | A | A | C |
| | Delamination | B | B | C |
| Weatherability after 200 hours | Yellowness index ΔYI | 8 | 16 | - |
| | Cracks | A | A | - |
| | Delamination | C | C | - |

Notes

In respect of numerical ranges disclosed in the present description it will of course be understood that in the normal way the technical criterion for the upper limit is different from the technical criterion for the lower limit, i.e. the upper and lower limits are intrinsically distinct proposals.

It will also be understood that references herein to polymers prepared by the (co)polymerisation of specified monomer(s) amount to descriptions of polymers obtainable by such (co)polymerisation, and to polymers definable as comprising the polymerised residues of the monomer(s) identified.

## Claims

**1.** A polycarbonate resin laminate comprising

(1) a substrate, comprising (1-i) a layer of polycarbonate resin and, on at least one surface of the polycarbonate resin layer, (1-ii) a layer of thermoplastic (meth)acrylic resin having a UV-absorbing group immobilized therein, and

(2) a scratch resistance film, of a cured coating composition containing UV-absorbing inorganic oxide fine particles, optionally also organic UV absorber, on said layer of the thermoplastic (meth)acrylic resin; wherein in the substrate the thermoplastic (meth)acrylic resin (1-ii) having a UV absorbing group immobilized therein is

a (meth)acrylic resin having a glass transition temperature of at least 90°C and obtainable by copolymerizing the following monomers (1-ii-a) and (1-ii-b):

(1-ii-a) a (meth)acrylic monomer having an organic UV absorbing group, and
(1-ii-b) a (meth)acrylic monomer other than monomer (1-ii-a) which is copolymerizable with monomer (1-ii-a), and wherein the copolymerizable (meth)acrylic monomer (1-ii-b) contains a (meth)acryloxypropyl trialkoxysilane as part thereof, and
in the scratch resistance film the UV-absorbing inorganic oxide fine particles are composite zinc oxide fine particles prepared by coating the surface of zinc oxide particles with at least one selected from oxides and hydroxides of A1, Si, Zr and Sn.

**2.** A polycarbonate resin laminate according to claim 1 wherein the substrate is a co-extrudate of the polycarbonate resin (1-i) and the thermoplastic (meth)acrylic resin (1-ii), and the layer of the thermoplastic (meth)acrylic resin (1-ii) has a thickness of 1 to 100 μm.

**3.** A polycarbonate resin laminate according to claim 1 wherein the substrate is one formed by laminating a film of the thermoplastic (meth)acrylic resin (1-ii) having a UV absorbing group immobilized therein, having a thickness of 1 to 100 μm, on the layer of the polycarbonate resin (1-i).

**4.** A polycarbonate resin laminate according to any one of claims 1 to 3 wherein the (meth)acrylic monomer (1-ii-a) containing the UV absorbing group is used at 1 to 40% by weight based on the copolymer composition.

**5.** A polycarbonate resin laminate according to any one of claims 1 to 4 wherein the cured scratch resistance film is one prepared by thermally curing a silicone coating composition comprising the UV absorbing inorganic oxide fine particles and optionally a said organic UV absorber (2-i), silica fine particles (2-ii), a silicone resin (2-iii), and a curing catalyst (2-iv).

**6.** A polycarbonate resin laminate according to any one of claims 1 to 4 wherein the cured scratch resistance film is one prepared by curing a (meth)acrylic coating composition comprising the UV absorbing inorganic oxide fine particles and optionally a said organic UV absorber (2-i), silica fine particles (2-ii), a compound having two or more (meth)acrylic groups per molecule, and a photopolymerization initiator (2-vi), by irradiating the composition with a light beam.

**7.** A polycarbonate resin laminate according to any one of claims 1 to 6 including a said organic UV absorber which is a triazine UV absorber.

**8.** A polycarbonate resin laminate according to any one of claims 1 to 6 wherein the composite zinc oxide fine particles are particles whereof a dispersion in a dispersion medium exhibits a photocatalytic degradability of up to 25%, as evaluated by measuring an absorbance change on photodegradation of methylene blue before and after 12 hour irradiation with black light at a power of 15 W, for which measurement the dispersion of composite zinc oxide fine particles is introduced in 20 g of methylene blue solution in water/methanol whose weight ratio is 1:1 and having a methylene blue concentration of 0.01 mmol/L, so that the concentration of the solid content of composite zinc oxide fine particles in the solution is 0.15 g, the solution is stirred in the dark for 30 minutes, then irradiated with the black light, then the solution is centrifuged at 3,000 rpm for 15 minutes to collect the supernatant, the absorbance at 653 nm being measured before and after the irradiation by black light, and the photocatalytic degradability being calculated from the difference in absorbance before and after the irradiation by the following equation:

$$\text{photocatalytic degradability (\%)} = [(A0-A)/A0] \times 100$$

wherein A0 represents initial absorbance and A represents absorbance after the black light irradiation.

**9.** A polycarbonate resin laminate according to any one of the preceding claims wherein the composite zinc oxide fine particles are those obtained by heating a zinc source in a direct current arc plasma for vaporization, oxidizing the zinc vapour, and coating the surface of the zinc oxide fine particles with at least one selected from oxides and hydroxides of Al, Si, Zr and Sn.

**10.** A polycarbonate resin laminate according to any one of the preceding claims wherein the composite zinc oxide fine

particles are surface-coated composite zinc oxide fine particles whose surface has been treated with at least one selected from hydrolysable silanes represented by the following formula (1):

$$(R^{01})_x(R^{02})_ySi(X')_{4-x-y} \qquad (1)$$

wherein $R^{01}$ and $R^{02}$ are independently a hydrogen atom or an unsubstituted or substituted monovalent hydrocarbon group; X' is a halogen atom, an alkoxy group containing 1 to 3 carbon atoms, an acyloxy group containing 1 to 3 carbon atoms, or isocyanate group: and x is 0 or 1, y is 0, 1, or 2, with the proviso that x+y is 0, 1, 2, or 3; and partial hydrolytic condensates thereof.

**11.** A polycarbonate resin laminate according to any one of claims 1 to 10 wherein the laminate does not show cracks, delamination, or yellowing of the cured film after 100 hours of a weatherability test using a Super UV Tester, using a repeating weathering cycle, wherein each weathering cycle is conducted by

(i) 5 hours at black panel temperature of 63°C, relative humidity of 50%, illuminance of 50 mW/cm$^2$, and raining of 10 sec/hour, followed by
(ii) 1 hour at black panel temperature of 30°C and relative humidity of 95%.

**12.** A polycarbonate resin laminate of any one of claims 1 to 11 in which the polycarbonate resin layer (1-i) is from 0.1 to 30 mm thick, the (meth)acrylic resin layer (1-ii) is from 1 to 100 $\mu$m thick and the scratch-resistance film (2) is from 0.1 to 50 $\mu$m thick.

**13.** A method of making a polycarbonate resin laminate according to any one of claims 1 to 12, comprising forming said substrate by combining said polycarbonate resin and thermoplastic (meth)acrylic resin, and applying said scratch-resistance film thereto.

**14.** A method of claim 13 comprising preliminarily forming the polymer of any one or more or all of the said layers and film by polymerisation of corresponding monomers.

## Patentansprüche

**1.** Polycarbonatharz-Laminat, das Folgendes umfasst:

(1) ein Substrat, das (1-i) eine Schicht aus Polycarbonatharz und auf zumindest einer Oberfläche des Polycarbonatharzes (1-ii) eine Schicht aus thermoplastischem (Meth)-acrylatharz mit einer darin immobilisierten UV-absorbierenden Gruppe umfasst, und
(2) ein Kratzschutzfilm aus einer gehärteten Beschichtungszusammensetzung, die Feinteilchen aus UV-absorbierendem anorganischem Oxid, gegebenenfalls auch organischen UV-Absorber, auf der Schicht aus thermoplastischem (Meth)acrylatharz umfasst; wobei
in dem Substrat das thermoplastische (Meth)acrylatharz (1-ii), das eine darin immobilisierte UV-absorbierende Gruppe aufweist, ein (Meth)acrylatharz mit einer Glasübergangstemperatur von zumindest 90 °C ist und durch Copolymerisieren der folgenden Monomere (1-ii-a) und (1-ii-b) erhältlich ist:

(1-ii-a) eines (Meth)acrylat-Monomers mit einer organischen UV-absorbierenden Gruppe und
(1-ii-b) eines anderen (Meth)acrylat-Monomers als Monomer (1-ii-a), das mit Monomer (1-ii-a) copolymerisierbar ist, wobei das copolymerisierbare (Meth)acrylat-Monomer (1-ii-b) ein (Meth)acryloxypropyltrialkoxysilan als Teil davon enthält; und
die Feinteilchen aus UV-absorbierendem anorganischem Oxid in dem Kratzschutzfilm durch Beschichten der Oberfläche von Zinkoxid-Teilchen mit zumindest einem, ausgewählt aus Oxiden und Hydroxiden von Al, Si, Zr und Sn hergestellte Zinkoxid-Verbund-Feinteilchen sind.

**2.** Polycarbonatharz-Laminat nach Anspruch 1, wobei das Substrat ein Co-Extrudat aus dem Polycarbonatharz (1-i) und dem thermoplastischen (Meth)acrylatharz (1-ii) ist und die Schicht aus dem thermoplastischen (Meth)acrylatharz (1-ii) eine Dicke von 1 bis 100 $\mu$m aufweist.

**3.** Polycarbonatharz-Laminat nach Anspruch 1, wobei das Substrat durch Auflaminieren eines Films aus dem thermoplastischen (Meth)acrylatharz (1-ii), das eine darin immobilisierte UV-absorbierende Gruppe aufweist, mit einer

Dicke von 1 bis 100 μm auf der Schicht aus Polycarbonatharz (1-i) ausgebildet ist.

4. Polycarbonatharz-Laminat nach einem der Ansprüche 1 bis 3, wobei das (Meth)acrylat-Monomer (1-ii-a), das die UV-absorbierende Gruppe enthält, in einer Menge von 1 bis 40 Gew.-%, bezogen auf die Copolymer-Zusammensetzung, eingesetzt ist.

5. Polycarbonatharz-Laminat nach einem der Ansprüche 1 bis 4, wobei der gehärtete Kratzschutzfilm durch thermisches Härten einer Silikon-Beschichtungszusammensetzung, die die Feinteilchen aus UV-absorbierendem anorganischem Oxid und gegebenenfalls den organischen UV-Absorber (2-i), Silica-Feinteilchen (2-ii), ein Silikonharz (2-iii) und einen Härtungskatalysator (2-iv) umfasst, hergestellt ist.

6. Polycarbonatharz-Laminat nach einem der Ansprüche 1 bis 4, wobei der gehärtete Kratzschutzfilm durch Härten einer (Meth)acrylat-Beschichtungszusammensetzung, die die Feinteilchen aus UV-absorbierendem anorganischem Oxid und gegebenenfalls den organischen UV-Absorber (2-i), Silica-Feinteilchen (2-ii), eine Verbindung mit zwei oder mehr (Meth)acrylat-Gruppen pro Molekül und einen Photopolymerisationsinitiator (2-vi) umfasst, durch Bestrahlen der Zusammensetzung mit einem Lichtstrahl hergestellt ist.

7. Polycarbonatharz-Laminat nach einem der Ansprüche 1 bis 6, das den organischen UV-Absorber umfasst, der ein Triazin-UV-Absorber ist.

8. Polycarbonatharz-Laminat nach einem der Ansprüche 1 bis 6, wobei die Zinkoxid-Verbund-Feinteilchen solche Teilchen sind, das eine Dispersion davon in einem Dispersionsmedium eine durch Messung der Absorptionsänderung des Photoabbaus von Methylenblau vor und nach 12 h Bestrahlung mit Schwarzlicht mit einer Leistung von 15 W bestimmte photokatalytische Abbaubarkeit von bis zu 25 % zeigt, wobei für die Messung die Dispersion von Zinkoxid-Verbund-Feinteilchen in 20 g einer Methylenblau-Lösung in Wasser/Methanol in einem Gewichtsverhältnis von 1:1 mit einer Methylenblau-Konzentration von 0,01 mmol/l so eingebracht wird, dass die Konzentration des Feststoffgehalts der Zinkoxid-Verbund-Feinteilchen in der Lösung 0,15 g beträgt, die Lösung im Dunkeln 30 min lang gerührt wird, dann mit dem Schwarzlicht bestrahlt wird, die Lösung anschließend mit 3.000 U/min 15 min lang zentrifugiert und der Überstand gewonnen wird, wobei die Absorption bei 653 nm vor und nach der Bestrahlung mit Schwarzlicht gemessen wird und die photokatalytische Abbaubarkeit aus der Differenz der Absorption vor und nach der Bestrahlung gemäß folgender Gleichung berechnet wird:

$$\text{photokatalytische Abbaubarkeit (\%)} = [(A0-A)/A0] \times 100$$

worin A0 für die anfängliche Absorption und A für die Absorption nach der Bestrahlung mit Schwarzlicht steht.

9. Polycarbonatharz-Laminat nach einem der vorangegangenen Ansprüche, wobei die Zinkoxid-Verbund-Feinteilchen durch Erhitzen einer Zinkquelle in einem Gleichstrom-Lichtbogenplasma zur Verdampfung, Oxidieren des Zinkdampfs und Beschichten der Oberfläche der Zinkoxid-Feinteilchen mit zumindest einem, ausgewählt aus Oxiden und Hydroxiden von Al, Si, Zr und Sn erhältlich sind.

10. Polycarbonatharz-Laminat nach einem der vorangegangenen Ansprüche, wobei die Zinkoxid-Verbund-Feinteilchen oberflächenbeschichtete Zinkoxid-Verbund-Feinteilchen sind, deren Oberfläche mit zumindest einem, ausgewählt aus hydrolysierbaren Silanen der folgenden Formel (1):

$$(R^{01})_x(R^{02})_ySi(X')_{4-x-y} \qquad (1)$$

worin $R^{01}$ und $R^{02}$ jeweils unabhängig ein Wasserstoffatom oder eine unsubstituierte oder substituierte einwertige Kohlenwasserstoffgruppe sind, X' ein Halogenatom, eine Alkoxygruppe mit 1 bis 3 Kohlenstoffatomen, eine Acyloxygruppe mit 1 bis 3 Kohlenstoffatomen oder eine Isocyanatgruppe sind, x = 0 oder 1 ist und y = 0, 1 oder 2 ist, mit der Maßgabe, dass x+y = 0, 1, 2 oder 3 ist; und partiellen hydrolytischen Kondensaten davon behandelt ist.

11. Polycarbonatharz-Laminat nach einem der Ansprüche 1 bis 10, wobei das Laminat keine Risse, Schichtablösung oder Vergilbung des gehärteten Films nach 100 h Wetterbeständigkeitstest unter Verwendung eines Super-UV-Testers und wiederholten Wetterzyklen zeigt, wobei jeder Wetterzyklus folgendermaßen durchgeführt wird:

(i) 5 h bei einer Schwarztafeltemperatur von 63 °C, einer relativen Luftfeuchtigkeit von 50 %, einer Beleuch-

tungsstärke von 50 mW/cm$^2$ und Regen von 10 s/h, gefolgt von
(ii) 1 h bei einer Schwarztafeltemperatur von 30 °C und einer relativen Luftfeuchtigkeit von 95 %.

**12.** Polycarbonatharz-Laminat nach einem der Ansprüche 1 bis 11, wobei die Polycarbonatharz-Schicht (1-i) 0,1 bis 30 mm dick ist, die (Meth)acrylatharz-Schicht (1-ii) 1 bis 100 $\mu$m dick ist und der Kratzschutzfilm (2) 0,1 bis 50 $\mu$m dick ist.

**13.** Verfahren zur Herstellung eines Polycarbonatharz-Laminats nach einem der Ansprüche 1 bis 12, das die Herstellung des Substrats durch Kombinieren des Polycarbonatharzes mit dem thermoplastischen (Meth)acrylatharz und das Auftragen des Kratzschutzfilms darauf umfasst.

**14.** Verfahren nach Anspruch 13, das die vorhergehende Herstellung des Polymers für eine oder mehrere oder alle der Schichten und den Film durch Polymerisation der entsprechenden Monomere umfasst.

## Revendications

**1.** Stratifié de résine de polycarbonate comprenant

(1) un substrat, comprenant (1-i) une couche de résine de polycarbonate et, sur au moins une surface de la couche de résine de polycarbonate, (1-ii) une couche de résine (méth)acrylique thermoplastique ayant un groupe absorbant les UV immobilisé dans celle-ci, et
(2) un film de résistance aux rayures, d'une composition de revêtement durcie contenant des particules fines d'oxyde inorganique absorbant les UV, facultativement en outre un absorbeur d'UV organique, sur ladite couche de la résine (méth)acrylique thermoplastique ; dans lequel

dans le substrat, la résine (méth)acrylique thermoplastique (1-ii) ayant un groupe absorbant les UV immobilisé dans celle-ci est une résine (méth)acrylique ayant une température de transition vitreuse d'au moins 90 °C et pouvant être obtenue par copolymérisation des monomères suivants (1-ii-a) et (1-ii-b) :

(1-ii-a) un monomère (méth)acrylique ayant un groupe absorbant les UV organique, et
(1-ii-b) un monomère (méth)acrylique autre que le monomère (1-ii-a) qui est copolymérisable avec le monomère (1-ii-a), et dans lequel le monomère (méth)acrylique copolymérisable (1-ii-b) contient un (méth)acryloxypropyltrialcoxysilane en tant que partie de celui-ci, et
dans le film de résistance aux rayures, les particules fines d'oxyde inorganique absorbant les UV sont des particules fines d'oxyde de zinc composites préparées par revêtement de la surface de particules d'oxyde de zinc avec au moins l'un choisi parmi des oxydes et des hydroxydes de Al, Si, Zr et Sn.

**2.** Stratifié de résine de polycarbonate selon la revendication 1 dans lequel le substrat est un coextrudat de la résine de polycarbonate (1-i) et de la résine (méth)acrylique thermoplastique (1-ii), et la couche de la résine (méth)acrylique thermoplastique (1-ii) a une épaisseur de 1 à 100 $\mu$m.

**3.** Stratifié de résine de polycarbonate selon la revendication 1 dans lequel le substrat est un substrat formé par stratification d'un film de la résine (méth)acrylique thermoplastique (1-ii) comportant un groupe absorbant les UV immobilisé dans celle-ci, ayant une épaisseur de 1 à 100 $\mu$m, sur la couche de la résine de polycarbonate (1-i).

**4.** Stratifié de résine de polycarbonate selon l'une quelconque des revendications 1 à 3 dans lequel le monomère (méth)acrylique (1-ii-a) contenant le groupe absorbant les UV est utilisé à 1 à 40 % en poids sur la base de la composition de copolymère.

**5.** Stratifié de résine de polycarbonate selon l'une quelconque des revendications 1 à 4 dans lequel le film de résistance aux rayures durci est un film préparé par durcissement thermique d'une composition de revêtement de silicone comprenant les particules fines d'oxyde inorganique absorbant les UV et facultativement ledit absorbeur d'UV organique (2-i), des particules fines de silice (2-ii), une résine de silicone (2-iii), et un catalyseur de durcissement (2-iv).

**6.** Stratifié de résine de polycarbonate selon l'une quelconque des revendications 1 à 4 dans lequel le film de résistance aux rayures durci est un film préparé par durcissement d'une composition de revêtement (méth)acrylique comprenant les particules fines d'oxyde inorganique absorbant les UV et facultativement ledit absorbeur d'UV organique (2-i), des particules fines de silice (2-ii), un composé comportant deux ou plus de deux groupes (méth)acryliques par

molécule, et un amorceur de photopolymérisation (2-vi), par irradiation de la composition avec un faisceau de lumière.

7. Stratifié de résine de polycarbonate selon l'une quelconque des revendications 1 à 6 comprenant ledit absorbeur d'UV organique qui est un absorbeur d'UV à base de triazine.

8. Stratifié de résine de polycarbonate selon l'une quelconque des revendications 1 à 6 dans lequel les particules fines d'oxyde de zinc composites sont des particules dont une dispersion dans un milieu de dispersion présente une dégradabilité photocatalytique allant jusqu'à 25 %, évaluée par mesure d'un changement d'absorbance lors de la photodégradation de bleu de méthylène avant et après 12 heures d'irradiation avec de la lumière noire à une puissance de 15 W, mesure pour laquelle la dispersion de particules fines d'oxyde de zinc composites est introduite dans 20 g de solution de bleu de méthylène dans eau/méthanol dont le rapport en poids est 1:1 et ayant une concentration de bleu de méthylène de 0,01 mmol/L, de sorte que la concentration de la teneur en matières solides de particules fines d'oxyde de zinc composites dans la solution est de 0,15 g, la solution est agitée dans l'obscurité pendant 30 minutes, puis irradiée avec la lumière noire, puis la solution est centrifugée à 3 000 trs/min pendant 15 minutes pour collecter le surnageant, l'absorbance à 653 nm étant mesurée avant et après l'irradiation de lumière noire, et la dégradabilité photocatalytique étant calculée à partir de la différence d'absorbance avant et après l'irradiation par l'équation suivante :

$$\text{dégradabilité photocatalytique (\%)} = [(A0-A)/A0] \times 100$$

dans laquelle A0 représente l'absorbance initiale et A représente l'absorbance après l'irradiation de lumière noire.

9. Stratifié de résine de polycarbonate selon l'une quelconque des revendications précédentes dans lequel les particules fines d'oxyde de zinc composites sont celles obtenues par chauffage d'une source de zinc dans un plasma à arc à courant continu pour vaporisation, oxydation de la vapeur de zinc, et revêtement de la surface des particules fines d'oxyde de zinc avec au moins l'un choisi parmi des oxydes et des hydroxydes de Al, Si, Zr et Sn.

10. Stratifié de résine de polycarbonate selon l'une quelconque des revendications précédentes dans lequel les particules fines d'oxyde de zinc composites sont des particules fines d'oxyde de zinc composites revêtues en surface dont la surface a été traitée avec au moins l'un choisi parmi des silanes hydrolysables représentés par la formule (1) suivante :

$$(R^{01})_x(R^{02})_ySi(X')_{4-x-y} \qquad (1)$$

dans laquelle $R^{01}$ et $R^{02}$ sont indépendamment un atome d'hydrogène ou un groupe hydrocarboné monovalent non substitué ou substitué ;
X' est un atome d'halogène, un groupe alcoxy contenant 1 à 3 atomes de carbone, un groupe acyloxy contenant 1 à 3 atomes de carbone, ou un groupe isocyanate : et x est 0 ou 1, y est 0, 1 ou 2, à condition que x+y soit 0, 1, 2 ou 3 ; et des condensats hydrolytiques partiels de ceux-ci.

11. Stratifié de résine de polycarbonate selon l'une quelconque des revendications 1 à 10 le stratifié ne présentant pas de craquelures, de délaminage ou de jaunissement du film durci après 100 heures d'un essai de résistance aux intempéries au moyen d'un Super UV Tester, en utilisant un cycle d'intempéries répétitif, dans lequel chaque cycle d'intempéries est conduit par

(i) 5 heures à une température de panneau noir de 63 °C, une humidité relative de 50 %, un éclairement de 50 $mW/cm^2$, et une pluie de 10 s/heure, suivies par
(ii) 1 heure à une température de panneau noir de 30 °C et une humidité relative de 95 %.

12. Stratifié de résine de polycarbonate selon l'une quelconque des revendications 1 à 11 dans lequel la couche de résine de polycarbonate (1-i) a une épaisseur de 0,1 à 30 mm, la couche de résine (méth)acrylique (1-ii) a une épaisseur de 1 à 100 $\mu$m et le film de résistance aux rayures (2) a une épaisseur de 0,1 à 50 $\mu$m.

13. Procédé de fabrication d'un stratifié de résine de polycarbonate selon l'une quelconque des revendications 1 à 12, comprenant la formation dudit substrat par combinaison desdites résine de polycarbonate et résine (méth)acrylique thermoplastique, et l'application dudit film de résistance aux rayures sur celui-ci.

**14.** Procédé selon la revendication 13 comprenant la formation préliminaire du polymère d'une ou plusieurs quelconques ou de la totalité desdites couches et dudit film par polymérisation des monomères correspondants.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4106161 A
- US 5250359 A
- JP 3102696 B
- JP 2001047574 A
- JP 3841141 B
- JP 58107316 A
- JP 55059929 A
- JP 2004175094 A
- JP 2003201400 A
- JP 2002370324 A
- JP 2003062952 A
- JP 2004001393 A


### Non-patent literature cited in the description


- *J. Org. Chem.,* 1980, vol. 45, 1164
- *J. Org. Chem.,* 1999, vol. 64, 7707